# EUROPÄISCHE PATENTSCHRIFT

(11) **EP 0 327 080 B1**
(45) Veröffentlichungstag und Bekanntmachung des Hinweises auf die Patenterteilung: **11.05.1994**
(21) Anmeldenummer: 89101759.2
(22) Anmeldetag: 01.02.1989
(51) Int. Cl.: F16L 19/08, F16L 47/04

(54) **Rohrklemmverbindung**
Pipe coupling
Raccord pour tuyau

(30) Priorität: 01.02.1988 DE 3802899; 23.01.1989 DE 8900701 U
(43) Veröffentlichungstag der Anmeldung: 09.08.1989
(73) Patentinhaber: Elsner, Lothar, D-71364 Winnenden (DE)
(72) Erfinder: Elsner, Lothar, D-71364 Winnenden (DE)
(74) Vertreter: Kastner, Hermann, Dipl.-Ing. Patentanwalt

(56) Entgegenhaltungen:
- US-A- 1 814 479
- US-A- 2 585 453
- US-A- 3 980 325

## Beschreibung

Rohrleitungssysteme sind im allgemeinen aus einzelnen Rohren unterschiedlicher Länge und manchmal auch unterschiedlichen Durchmessers zusammengesetzt, die an ihren Enden mittels Rohrkupplungen miteinander verbunden sind. Meist sind noch an verschiedenen Stelen des Rohrleitungssystems Armaturen unterschiedlicher Art, beispielsweise Hähne, Ventile oder Absperrschieber vorhanden, die in gleicher Weise mit den daran anschließenden Rohren verbunden sind. Alle diese Verbindungsstellen müssen die gleiche Dichtigkeit und Festigkeit wie die einzelnen Rohrabschnitte haben. Das gilt sowohl für Metallrohre wie auch für Rohre aus Kunststoff. Letztere können ausschließlich aus Kunststoff, und zwar aus einem thermoplastischen Kunststoff, hergestellt sein. Sie können aber auch aus einem Verbundwerkstoff bestehen, bei dem in einem duroplastischen Kunststoff Verstärkungen und Verstärkungselemente, insbesondere in form von Glasfasern, eingebettet sind. Diese werden kurz als GFK-Rohre bezeichnet. Da die GFK-Rohre ohnehin schichtweise hergestellt werden, gibt es die Möglichkeit,verschiedene Schichten des Rohres aus verschiedenen Kunststoffen herzustellen, die für die ihnen jeweils zugedachte Aufgabe besonders gut geeignet sind.

Bei Metallrohren großer Festigkeit werden meist Kupplungselemente aus Metall, sogenannte Fittings, verwendet, bei denen die Rohrenden und die Kupplungsteile mit darin eingeschnittenen Gewinden versehen sind, so daß die Rohre und die Kupplungsteile unmittelbar miteinander verschraubt werden können. Daneben gibt es noch Schneidringverbindungen, bei denen ein Schneidring mit seiner Stirnschneide in einen Innenkonus hineingedrückt wird, so daß die Stirnschneide sich verengt und in das Rohr einschneidet, das sie umgibt.

Diese Art der Rohrverbindung kann allenfalls noch bei Rohren aus Metallen geringerer Festigkeit, nicht aber mehr für Rohre aus Kunststoff verwendet werden.

Bei Kunststoffrohren gibt es unlösbare Verbindungen, bei denen die Rohrabschnitte durch Schweißen unmittelbar miteinander verbunden werden oder durch Verkleben entweder untereinander oder mittels Kupplungselementen miteinander verbunden werden. Beim Verschweißen zweier Rohrenden tritt auf der Innenseite der Schweißstelle meist ein stärkerer Schweißgrat auf, der den Durchlaßquerschnitt des Rohres an der Verbindungsstelle erheblich einengt und bei der Durchleitung eines Fluids auf jeden Fall zu Turbulenzen in dem Fluid führt. Klebeverbindungen erfordern eine große Sorgfalt bei ihrer Ausführung. Dazu wird geschultes Fachpersonal benötigt. Selbst beim Vorhandensein von solchem Fachpersonal können auf einer Baustelle die Klebeverbindungen dennoch nicht immer mit ausreichender Zuverlässigkeit hergestellt werden. Die Klebeverbindung ist außerdem anfällig gegen bestimmte Fluide und/oder gegen bestimmte Inhaltsstoffe der Fluide, so daß sie schon deshalb nicht immer angewandt werden kann. Dabei ist es von großem Nachteil, daß diese Anfälligkeit gegen das Fluid selbst oder gegen Inhaltsstoffe des Fluids sich erst nach dem Herstellen der Verbindung im Laufe der Zeit herausstellen kann und daß dann unter Umständen das ganze Leitungssystem ausgetauscht werden muß. Ein weiterer großer Nachteil sowohl der Schweißverbindung, wie auch der Klebeverbindung ist der, daß die Verbindungsstellen sich nachträglich nicht mehr lösen lassen, selbst dann nicht, wenn Änderungen der Leitungsführung erforderlich werden oder wenn nachträglich weitere Anschlüsse hergestellt werden müssen.

Für Rohrleitungssysteme aus Kunststoffrohren gibt es auch lösbare Verbindungen, und zwar als Rohrklemmverbindungen unterschiedlicher Bauart. Allen gemeinsam ist, daß irgend ein ringförmiges in sich verformbares Klemmteil, ein Klemmring, zwischen zwei relativ zueinander bewegbaren konischen Anlageflächen axial eingeklemmt wird und daß dabei, das heißt durch die dabei auftretende elastische Formänderung, der Klemmring sich einerseits an dem Rohr und andererseits an einem anderen Teil der Rohrkupplung dicht anlegt und dadurch die Stoßstelle der Rohre miteinander dicht verbindet.

Bei einem Großteil dieser Rohrklemmverbindungen ist häufig eine Stützhülse erforderlich, die entweder als loses Teil in das Rohrende eingeschoben wird, oder die am Kupplungskörper angeformt ist und beim Zusammenfügen des Rohres mit dem Kupplungsteil in das Rohr hineingeschoben wird.

Diese Stützhülsen jeglicher Art haben den großen Nachteil, daß sie eine beträchtliche Querschnittsverengung der Rohrleitung ergeben, was stets mit einem entsprechend großen Druckabfall und häufig auch mit höherer Geräuschbildung verbunden ist. Bei Rohrleitungssystemen mit einer großen Anzahl von in das System einbezogenen Armaturen kann sich der Druckabfall bei den einzelnen Kupplungsstellen zu einem sehr hohen Wert summieren. Die Verwendung von Stützhülsen hat noch den weiteren großen Nachteil, daß für das Einschieben der Stützhülse in das Rohr oder umgekehrt, für das Einschieben des Rohres in den Kupplungskörper mit angeformter Stützhülse, zuerst das Rohrende erwärmt werden muß. Bei unsachgemäßer Erwärmung kann das Rohr beschädigt werden. Es gibt auch Rohrklemmverbindungen ohne Stützhülse. Bei ihnen sind die Klemmringe stets an einer Umfangsstelle durchgehend geschlitzt, weil wegen des Fehlens der Stützhülse die elastische Verformung des Rohres, insbesondere im Bereich der Konusflächen zwischen Stützring und Überwurfschraube verhältnismäßig groß sind. Hinzu kommt, daß insbesondere bei thermoplastischen Kunststoffrohren die Maßtoleranzen bekanntermaßen sehr groß sind und daher insgesamt eine große Durchmesserveränderung und/oder Durchmessertoleranz überbrückt werden muß. Wegen dieses Längsschlitzes vermögen die Klemmringe die Abdichtung nicht zu übernehmen, weshalb zusätzlich ein Rundschnurring als eigentliches Dichtungselement erforderlich ist er wird in eine Ausnehmung am Kupplungskörper eingelegt.

Bei einer Art dieser Rohrklemmverbindungen wird der Rundschnurring in eine auf der Innenseite des Kupplungskörpers angeordnete Nut mit zwei Schultern eingelegt und durch das Fluid selbst gegen die in der Druckrichtung außen gelegene Schulter gedrückt und dadurch die Dichtwirkung erzeugt. Bei einer anderen Art dieser Rohrklemmverbindungen wird der Rundschnurring in eine axiale Ausnehmung des Kupplungskörpers eingelegt, wo er sich an einer Schulter der Ausnehmung anlegt. Außerdem wird auf der anderen Seite des Rundschnurringes ein Anlaufring eingelegt, der von der Überwurfschraube der Rohrklemmverbindung gegen den Rundschnurring gedrückt wird, so daß er in dem verbleibenden Hohlraum elastisch verformt wird und er in radialer Richtung sich einerseits am Kupplungskörper und andererseits an der Rohraußenseite dicht anlegt.

Bei der erstgenannten Rohrklemmverbindung wird das Rohr durch einen Klemmring festgehalten, der außerhalb des Rundschnurringes aus dem Rohr sitzt und durch eine Überwurfmutter gegen den Kupplungskörper gedrückt wird, wobei die Überwurfmutter eine Innenkonusfläche aufweist, die mit einer Außenkonusfläche am Klemmring zusammenwirkt und beim Anziehen der Überwurfmutter dafür sorgt, daß die auf der Innenseite des Klemmringes vorhandenen umlaufende Ringrippen mit scharfer Innenkante infolge der elastischen Verformung des Klemmring sich in die Außenseite des Rohres eindrücken und eingraben. Bei der zweitgenannten Rohrklemmverbindung liegt der Klemmring zwischen dem Anlaufring für den Rundschnurring und einer davon entfernt angeordneten Innenkonusfläche einer Überwurfschraube. Dieser Klemmring wird beim Anziehen der Überwurfschraube ebenfalls radial einwärts elastisch verformt, so daß auch bei ihm die innen gelegenen Ringrippen sich in die Außenseite des Rohres eingraben. Durch den Hals der Überwurfschraube wird gleichzeitig der Anlaufring gegen den Rundschnurring gedrückt.

Bei diesen beiden Arten der Rohrklemmverbindungen sorgt der Rundschnurring für die Abdichtung der Verbindungsstelle, während die Ringrippen an der Innenseite des Klemmringes für die nötige Haltekraft zwischen dem Rohr und der Kupplung sorgen, die der Rundschnurring alleine nicht aufbringen kann, die aber erforderlich ist, damit das Rohrsystem nicht unter der Druckwirkung des Fluids auseinandergezogen wird. Diese Rohrklemmverbindungen mit Rundschnurring haben den großen Nachteil, daß die Rundschnurringe keine sehr große Dauerstandfestigkeit haben und sie sich vor allem bei Fluiden mit wechselndem Druck und insbesondere wechselnder Temperatur, wie das zum Beispiel bei Warmwasserleitungen in Haushaltungen der Fall ist, nach einer mehr oder minder langen Zeitspanne verändern, wodurch ihre Dichtwirkung nachläßt oder ganz verschwindet. Insbesondere ist hierbei das zunehmende Kriechen des Werkstoffes der Rundschnurringe von Nachteil.

Diese Rohrklemmverbindungen haben noch den Nachteil, daß der Klemmring zwischen dem Rohr und einer Innenkonusfläche der Überwurfmutter oder Überwurfschraube eingeklemmt wird, so daß beim Anziehen der Überwurfmutter oder Überwurfschraube über die aneinander anliegenden Konusflächen ein erhebliches Drehmoment auf das Rohr ausgeübt wird. Für den Fall, daß mit der Rohrleitung bereits Armaturen verbunden sind, muß das Verdrehen des Rohres verhindert werden. Wenn das Rohr an den bereits vorhandenen Armaturen festgehalten wird, kann es vorkommen, daß deren Klemmverbindung wieder gelockert wird. Wenn das Rohr selbst festgehalten wird, kann es vorkommen, daß das Rohr beschädigt wird, weil dafür Zangen eingesetzt werden müssen.

Bei diesen Rohrklemmverbindungen wird die Klemmkraft des Klemmringes durch das Zusammenwirken der Konusflächen einerseits am Klemmring und andererseits an der Überwurfmutter oder Überwurfschraube erzeugt. Da der Flankenwinkel gegenüber der Längsachse der Rohrkupplung verhältnismäßig steil ist, haben die Konusflächen nur eine sehr geringe axiale Erstreckung, so daß, die vom Klemmring auf das Rohr ausgeübte Radialkraft sich auf einen sehr kurzen Längenabschnitt des Rohres konzentriert. Daduch wird das Rohr örtlich einer sehr hohen Beanspruchung ausgesetzt, was dazu führt, daß das Rohr an dieser Stelle elastisch verhältnismäßig stark eingeschnürt wird. Außerdem besteht dabei die Gefahr, daß die Ringrippen des Schneidringes auf diesem kurze Längenabschnitt sich sehr stark in die Rohraußenseite eingraben und sie dadurch eine erhebliche Kerbwirkung am Rohr hervorrufen, die sich auf einen relativ kurzen Längenabschnitt konzentriert. Das vermindert die mechanische Dauerstandsfestigkeit des Rohres ganz erheblich.

Der Erfindung liegt die Aufgabe zugrunde, eine Rohrklemmverbindung zu schaffen, die eine größere Dauerstandfestigkeit als die bekannten Rohrklemmverbindungen hat.

Beim Anziehen der Überwurfschraube oder Überwurfmutter als Betätigungsglied der Rohrklemmverbindung wird zunächst der Klemmring in axialer Richtung in den sehr schlanken Innenkonus des Kupplungskörpers hineingedrückt. Dabei verengter sich zunächst elastisch In dem Maße, in dem am Klemmring am ungeschlitzten Längenabschnitt an seinem vorderen Ende der Verschiebewiderstand großer wird, nimmt die axiale Anlagekraft zwischen der ebenen Anlagefläche am hinteren Ende des Klemmrings und der ebenfalls ebenen Anlagefläche am Betätigungsglied zu. Das erhöht die Reibkraft zwischen diesen beiden Anlageflächen in Umfangsrichtung. Infolge des Wendelschlitzes verengen sich dabei die bandartig nebeneinander liegenden Windungen des Klemmringes. Dadurch leigt ihre Außenkonusfläche weniger stark an der Innenkonusfläche des Kupplungskörpers an, während ihre zylindrische Innenseite mit den Ringrippen sich immer stärker am Rohr anlegt. Dabei wird der ungeschlitzte Längenabschnitt am vorderen Ende des Klemmringes immer weiter in den Innenkonus des Kupplungskörpers hineingeschoben, bis er infolge seiner in radialer Richtung einwärts erfolgenden elastischen Verformung voll am Rohr anliegt. Bei größerem Untermaß des Rohres in Bezug auf den Nenndurchmesser des Klemmrings und/oder bei größerer radialer Nachgiebigkeit des Rohres kann der ungeschlitzte Längenabschnitt sich auch plastisch verformen, d.h. bleibend verengen. Bei der Verengung des ungeschlitzten Längenabschnittes graben die Ringrippen dieses Längenabschnittes sich in die Außenseite des Rohres ein und sorgen für eine gute Abdichtung zwischen dem Rohr und dem Klemmring. Auf der Außenseite sorgen die aneinander anliegenden sehr schlanken Konusflächen einerseits des ungeschlitzten Längenabschnittes des Klemmringes und andererseits des Kupplungskörper für eine sehr gute Abdichtung zwischen diesen beiden Teilen, ohne daß es dafür eines weiteren Dichtungselementes, etwa in Form eines Rundschnurringes, bedarf.

Bei diesem Vorgang gelangen auch die an den ungeschlitzten Längenabschnitt sich anschließenden Windungen des Klemmringes allmählich in einen Axialbereich des Kupplungsringes, in dem sie sich nicht nur infolge der Einschnürung mit ihrer Innenseite am Rohr fest anlegen, sondern indem ihre Außenkonusflächen sich an der Innenkonusfläche des Kupplungskörpers fest anlegt. Dabei graben sich auch die an der Innenseite der Windungen des Klemmringes vorhandenen die Ringrippen in die Außenseite des Rohres ein. Da bei den an den ungeschlitzten Längenabschnitt anschließenden Windungen des geschlitzten Längenabschnittes des Klemmringes die Wandstärke zum hinteren Ende hin stetig zunimmt, nimmt bei diesen Windungen auch das Widerstandsmoment gegen Biegung stetig zu, und zwar progressiv. Das hat zur Folge, daß die unter der Wirkung der beim Anziehen der Überwurfschraube oder Überwurfmutter auftretende Umfangskraft an der hinteren Stirnseite des Klemmringes die Windungen des geschlitzten Längenabschnittes sich mit abnehmender Intensität am Rohr anlegen und ihre Ringrippen sich dementsprechend mit abnehmender Intensität in die Rohrwandung eingraben. Dadurch wird das Rohr wohl auf der ganzen Länge des Klemmringes eingespannt und festgehalten. Es tritt aber an keiner Stelle im Axialbereich des Klemmringes eine örtliche mechanische Überbeanspruchung des Rohres ein. Wegen der nach dem hinteren Ende des Klemmringes hin abnehmenden Eingrabungstiefe der Ringrippen wird eine ungünstige Kerbwirkung dieser Ringrippen am Übergang zum freien Rohrabschnitt außerhalb des Klemmringes vermieden. Durch die große Anzahl der in die Außenseite des Rohres mehr oder weniger stark eingegrabenen Ringrippen oder Ringrippenabschnitte wird ein sehr hoher Ausziehwiderstand erreicht, der verhindert, daß das Rohr von den Druckkräften des Fluids im Rohrleitungssystem aus den Kupplungen herausgezogen wird.

Infolge des Fehlens von Dichtungselementen aus elastromeren Werkstoffen können Alterungsprozesse an der Dichtung nicht auftreten. Infolge der Einspannung des Rohrendes in einem größeren Längenabschnitt mit entsprechend weitläufiger Verteilung der dort wirkenden radialen und axialen Klemm-und Haltekräfte sind örtlich Überbeanspruchungen de Rohres nicht zu befürchten. Daduch erreicht eine solche Rohrklemmverbindung eine Dauerstandsfestigkeit, die derjenigen des Rohres außerhalb der Rohrklemmverbindung zumindest nahekommt, wenn nicht gar gleichkommt und damit weit über diejenige hinausgeht, die bei herkömmlichen Rohrklemmverbindungen erwartet werden kann.

Ein weiterer Vorzug dieser Rohrklemmverbindung liegt darin, daß der ungeschlitzte Längenabschnitt des Klemmringes die geringste Wandstärke hat und daher selbst bei der geschlossenen Ringform leicht verformbar ist. Aufgrund dessen und aufgrund der großen Nachgiebigkeit der Windungen im geschlitzten Bereich des Klemmringes kann das Gewinde für die Überwurfschraube oder Überwurfmutter verhältnismäßig grob gehalten werden. Es kann sogar das bei Metallfittings für den betreffenden Rohrdurchmesser übliche Rohrgewinde verwendet werden. Das wiederum ermöglicht es, im Bedarfsfalle beispielsweise in den Kupplungskörpern einen normalen Verschlußstopfen einzuschrauben oder eine Armatur mit dem üblichen Rohrgewinde am Kupplungskörper anzuschrauben. Dadurch können Übergangsstücke mit unterschiedlicher Gewindeausbildung eingespart werden.

Bei einer Ausgestaltung der Rohrklemmverbindungen nach Anspruch 2 wird die Herstellung des Wendelschlitzes erleichtert, weil der Klemmring an beiden Enden eingespannt werden kann. Der ungeschlitzte Längenabschnitt verhindert auch das Auslaufen der letzten Windung in einem spitzen Ende, das infolge des abnehmenden Biegewiderstandsmomentes verstärkt einer einschnürenden Wirkung des Reibschlusses mit der Überwurfschraube oder Überwurfmutter ausgesetzt wäre. Außerdem wird dadurch eine scharfe Spitze am hinteren Ende der Klemmringe vermieden, die beim Handhaben der Klemmringe zu Verletzungen Anlaß geben könnte, und zwar insbesondere dann, wenn die Spitze durch Beschädigungen verbogen sein würde. Durch die zylindrische Außenfläche des ungeschlitzten Längenabschnittes wird vermieden, daß dieser Längenabschnitt sich im Außenkonus das Kupplungskörpers verklemmt, ehe die übrigen Teile des Klemmringes ausreichend weit in den Innenkonus des Kupplungskörpers hineingeschoben worden sind.

Durch eine Ausgestaltung der Rohrklemmverbindung nach Anspruch 3 wird ein ausgewogenes Verhältnis zwischen einerseits der axialen Verschiebung und axialen Verschiebekraft und andererseits einer ausreichend großen radialen und axialen Einspannungskraft erreicht. Das gilt insbesondere für die GFK-Rohre, die sich mit verhältnismäßig geringen Maßtoleranzen herstellen lassen. Bei Rohren, die ausschließlich aus einem thermoplastischen Kunststoff hergestellt sind, die in der Regel größere Maßtoleranzen aufweisen, kann es zweckmäßig sein, den Neigungswinkel der Innenkonusfläche am Kupplungsring größer zu machen, und zwar bis etwa 10°. Durch die Verringerung des Neigungswinkels der Außenkonusfläche des Klemmringes wird erreicht, daß die beim axialen Zusammenschieben der Windungen des geschlitzten Längenabschnittes des Klemmringes eintretende Vergrößerung des Neigungswinkels einer den Klemmring umhüllenden Mantelfläche wieder ausgeglichen wird und an den gleichbleibenden Neigungswinkel der Innenkonusfläche des Kupplungskörpers angeglichen wird.

Durch die Ausgestaltung der Rohrklemmverbindung nach Anspruch 4 wird eine besonders gute Dichtwirkung des ungeschlitzten Längenabschnittes des Klemmringes erreicht.

Bei einer Ausgestaltung der Rohrklemmverbindung nach Anspruch 5 wird erreicht, daß beim Anziehen der Überwurfschraube oder Überwurfmutter die Ringrippen des Klemmringes sich einerseits ausreichend weit in die Außenseite des betreffenden Rohres eingraben und dieses nach außen sowohl gut abdichten, wie auch mechanisch festhalten und andererseits, insbesondere bei GFK-Rohren, deren Glasfaserarmierung nicht oder zumindest nicht in schädlicher Weise durchschneiden. Die normal ausgerichtete Vorderflanke der Ringrippen sorgt für einen sehr hohen Ausziehwiderstand für das eingeklemmte Rohr. Die Ausrundung der Rückenflanke sorgt dafür, daß der Werkstoff an der Außenseite des Rohres nicht zu sehr zur Seite verdrängt wird und dabei sich möglicherweise von den darunterliegenden Werkstoffschichten ablöst.

Durch eine Ausgestaltung der Rohrklemmverbindung nach Anspruch 6 wird sowohl eine gute Einspannmöglichkeit für das Schlitzen des mittleren Längenabschnittes geschaffen, wie auch eine ausreichende Stabilisierung der Windungen mit einer mittigen Führung erreicht.

Durch eine Ausgestaltung der Rohrklemmverbindung nach Anspruch 7 wird ein ausgeglichenes Verhältnis zwischen einerseits einer sicheren Einspannung und Halterung des Rohres und andererseits einer Beschränkung der Gesamtlänge der Rohrklemmverbindung erreicht.

Bei einer Ausgestaltung der Rohrklemmverbindung nach Anspruch 8 wird erreicht, daß die Ringrippen eine ausreichende Festigkeit für das Eindringen in die Außenseite des Rohres und eine ausreichende Biegefestigkeit beim Auftreten von Ausziehkräften erreichen.

Mit einer Ausgestaltung der Rohrklemmverbindung nach Anspruch 9 kann duch das Korrosionsschutzmittel der Klemmring an der Stirnseite und an dem abgesetzten Abschnitt seiner Umfangsfläche gezielt oder allgemein prophylaktisch gegen korrodierende Angriffe des Fluids oder von Inhaltsstoffen des Fluids geschützt werden. Dadurch kann beispielsweise ein Klemmring aus Messing gegen Entzinkungserscheinungen geschützt werden, ohne daß beim Vorhandensein entweder sehr reiner Wässer oder spezieller aggressiver Wässer gleich ein Sonderwerkstoff für den Klemmring verwendet werden muß. Der abgesetzte Abschnitt der Außenkonusfläche am ungeschlitzten Längenabschnitt des Klemmringes dient dazu, das Korrosionsschutzmittel mit einer Schichtdicke von vorzugsweise 0,1 mm aufzunehmen, ohne daß es beim Einschieben und vor allen Dingen beim Einpressen des Klemmringes in den Außenkonus des Kupplungsgehäuses von letzterem abgeschabt wird. Die Rille am Ende des abgesetzten Abschnittes dient dazu, die Teile des Korrosionsschutzmittels aufzunehmen, die über die geometrische Mantelfläche der Außenkonusfläche des Klemmringes überstehen und dadurch beim Einpressen des Klemmringes weggeschoben werden. Der scharfkantige Übergang von der hinten gelegenen Wand der Rille zur nicht abgesetzten Außenkonusfläche sorgt dafür, daß an der Innenkonusfläche des Kupplungskörpers haftendes Korrosionsschutzmittel davon abgeschabt wird, wenn der Klemmring eingepreßt wird, so daß diese Teile des Rostschutzmittels nicht die gleichmäßige satte Anlage des nicht abgesetzten Abschnittes des ungeschlitzten Längenabschnittes des Klemmringes beeinträchtigen könne. Dadurch daß des Ende des Wendelschlitzes um ein gewisses Maß von der Rille entfernt festgelegt wird, wird sichergestellt, daß eine ausreichend breite Anlagefläche des ungeschlitzten Längenabschnittes des Klemmringes an der Innenkonusfläche des Kupplungskörpers gewährleistet ist, die der äußeren Abdichtung des Klemmringes dient. Mit einer Weiterbildung der Rohrklemmverbindung nach Anspruch 10 läßt sich das Korrosionsschutzmittel verhältnismäßig einfach und sicher aufbringen, wobei die Auswahl des Korrosionsschutzmittels von den Gegebenheiten des Einsatzortes abhängt.

Durch eine Ausgestaltung der Rohrklemmverbindung nach Anspruch 11, und zwar insbesondere bei der Verwendung von glasfaserverstärktem Kunststoff für den Klemmring und den Kupplungskörper, haben diese Teile die gleichen oder zumindest ähnliche Eigenschaften in Bezug auf elastische Verformungen und/oder Form- und Maßänderungen aufgrund von Temperaturänderungen. Dadurch wird das Verhalten der Rohrklemmverbindung und das der damit gekuppelten Rohre einander angenähert. Bei einer Weiterbildung der Rohrklemmverbindung nach Anspruch 12 wird erreicht, daß die Ringrippen an der Innenseite des Klemmringes eine verhältnismäßig hohe Formfestigkeit haben, die ein sicheres Eindringen und Eingraben an der Außenseite der festzuhaltenden Rohre gewährleistet, deren äußere Schicht in der Regel eine vergleichsweise geringere Festigkeit hat.

Mit einer Ausgestaltung der Rohrklemmverbindung nach Anspruch 13 wird erreicht, daß die Rohre auch dann noch leicht und ohne Beschädigung einerseits des Klemmringes und andererseits des Rohres selbst in die Rohrklemmverbindung eingeschoben werden können, wenn letztere bereits vormontiert ist und der Klemmring locker im Innenkonus des Kupplungskörpers sitzt und von der teilweise eingeschraubten Überwurfschraube oder der teilweise aufgeschraubten Überwurfmutter gehalten und abgedeckt wird.

Durch eine Rohrklemmverbindung nach Anspruch 14 läßt der Klemmring sich leichter in den Kupplungskörper einsetzen, zumal durch den Wendelschlitz der Klemmring eine geringere Formfestigkeit hat, als ein ungeschlitzter Ring und er dadurch bei der Lagerung und bei der Handhabung eher geringfügigen Formänderungen ausgesetzt ist.

Bei einer Ausgestaltung der Rohrklemmverbindung nach Anspruch 15 wird beim Anziehen der Überwurfschraube oder Überwurfmutter der zwischen ihr und dem Klemmring eingelegte Stemmring so verformt, daß seine Außenkante sich an der darauf abgestimmten Kreiszylinderfläche des Kupplungskörpers eingräbt, der Stemmring gewissermaßen mit dem Kupplungskörper verstemmt, so daß der das Rohr festklemmende und abdichtende Klemmring auch dann in seiner Klemm- und Dichtstellung festgehalten wird, wenn die Überwurfschraube oder Überwurfmutter, aus welchem Grunde auch immer, sich lockert oder sonstwie nachgibt. Diese Ausgestaltung kommt dementsprechend für solche Rohrverbindungen in Betracht, die einerseits nicht mehr gelöst werden müssen und die andererseits einen erhöhten Sicherheitsgrad gegen Lösen und/oder Undichtwerden erfordern. Das gilt vor allem für verdeckt verlegte Rohrleitungen oder für solche Rohrleitungen, die später nicht mehr ohne weiteres zugänglich sind.

Mit einer Ausgestaltung der Rohrklemmverbindung nach Anspruch 16 folgt die radiale Tiefe der Ausnehmungen zwischen den Ringrippen der vom vorderen zum hinteren Ende des Klemmrings abnehmenden Eindringtiefe der Ringrippen in die Außenseite des Rohres. Dadurch wird im mittleren und hinteren Bereich des Klemmringes die Umfangsfäche der Ausnehmungen zum Führen und Halten des eingespannten Rohres mit herangezogen, das damit in diesem Bereich zwischen den Ringrippen nicht hohl liegt. Dadurch wird einer möglichen Kerbwirkung der Rinrippen, vor allem im hinteren Bereich des Klemmringes, bei einer Biegebelastung des eingespannten Rohres vorgebeugt. Das trifft vor allem für diejenigen Ausführungsformen des Klemmringes zu, bei denen am Ende ein ungeschlitzter Längenabschnitt vorhanden ist, der bei der Ausgestaltung nach Anspruch 16 eine glatte Innenfläche erhält.

Durch die Verwendung einer Überwurfmutter anstelle einer Überwurfschraube kann der Kupplungskörper im allgemeinen deswegen erheblich kürzer ausgeführt werden, weil das Gewinde dafür auf der Außenseite des Kupplungskörpers in etwa in demselben Längenabschnitt angebracht werden kann, in dem auf der Innenseite die Innekonusfläche für den Klemmring gelegen ist. Außerdem läßt sich dabei meist auch der Außendurchmesser des Kupplungskörpers verringern, weil das Innengewinde für die Überwurfschraube eine größere lichte Weite als die Innenkonusfläche bei ihrem großen Durchmesser haben muß. Bei einer Ausgestaltung einer solchen Rohrklemmverbindung nach Anspruch 17 wird durch den kragenförmigen Fortsatz an der Überwurfmutter ein größerer axialer Betätigungsweg für das hintere Ende des Klemmringes ermöglicht, weil im bedarfsfalle der Fortsatz bis in den Kupplungskörper hineinbewegt werden kann. Das vermindert die Abhängigkeit von der Einhaltung geringer Fertigungstoleranzen bei der Rohrklemmverbindung und vor allem beim Rohr.

Bei einer Ausgestaltung der Rohrklemmverbindung nach Anspruch 18 wird durch den Bund sichergestellt, daß ein in die Rohrklemmverbindung eingeschobenes Rohr gerade so weit eingeschoben wird, wie es für ein sicheres Einklemmen und Abdichten erforderlich ist, und dadurch zugleich vermieden, daß das Rohr aus Versehen bis über die richtige Stellung hinaus in den Bereich der anschließenden Rohrklemmverbindung hinübergeschoben wird, wo dann das dort einzuschiebende Rohr nicht mehr die richtige Stellung erreichen könnte. Dadurch, daß an den Bund eine Kreiszylinderfläche anschließt, die auf den Außendurchmesser des Rohres abgestimmt ist, wird das in die Rohrklemmverbindung eingeschobene Rohr im Kupplungskörper selbst genau zentriert, also unabhängig von der zufällig vorhandenen axialen und radialen Stellung des Klemmringes im Kupplungskörper. Durch die an die Kreiszylinderfläche anschließende Innenkonusfläche wird das Einschieben des Rohres in den Längenabschnitt mit der Kreiszylinderfläche erleichtert und zugleich verhindert, daß das Rohr bereits vor Erreichen de Kreiszylinderfläche anstößt. Diese Ausgestaltung wird anstelle der Grundform immer dann bevorzugt verwendet, wenn die bei ihr sich ergebende Verlängerung des Grundkörpers für ihren Einsatz nicht hinderlich ist.

Mit einer nach Anspruch 19 ausgestalteten Rohrklemmverbindung können auch Kunststoffrohre mir einer größeren elastischen nachgiebigkeit, wie z.B. Rohre aus einem thermoplastischen Kunststoff, sicher miteinander verbunden werden oder an eine Armatur angeschlossen werden. Dabei dient der axiale Fortsatz am Kupplungskörper als Stützkragen für das Rohrende, das sich mit der darauf abgestimmten Ausnehmung auf seiner Innenseite am Stützkragen in radialer Richtung abstützt. Dadurch wird erreicht, daß beim Anziehen der Überwurfschraube oder Überwurfmutter die Rohrwand unter der Wirkung der Radialkraft des Klemmringes nicht nach innen ausweichen kann und daß die Ringrippen des ungeschlitzten Längenabschnittes des Klemmringes sich in die Rohrwand eingraben können und das Rohr siche abdichten können. Außerdem wird dadurch das Rohr sicher festgehalten.

Im folgenden wird die Erfindung anhand mehrerer in der Zeichnung dargestellter Ausführungsbeispiele näher erläutert. Es zeigen:
- Fig. 1: einen Längsschnitt einer Rohrkupplung mit zwei Rohrklemmverbindungen mit je einem Klemmring;
- Fig. 2: einen Längsschnitt eines der Klemmringe;
- Fig. 3: einen vergrößert dargestellten Ausschnitt des Klemmringes nach Fig. 2;
- Fig. 4: einen ausschnittweise dargestellten Längsschnitt einer weiteren Ausführungsform der Rohrklemmverbindung;
- Fig. 5: einen ausschnittweise und vergrößert dargestellten Längsschnitt einer abgewandelten Ausführungsform des Klemmringes;
- Fig. 6: einen ausschnittweise dargestellten Längsschnitt einer weiteren Ausführungsform der Rohrklemmverbindung im vormontierten Zustand;
- Fig. 7: einen ausschnittweise dargestellten Längsschnitt der Ausführungsform der Rohrklemmverbindung nach Fig. 6 im fertigmontierten Zustand.
- Fig. 8: teils einen Längsschnitt und teil eine Ansicht einer Ausführungsform der Rohklemmverbindung mit Überwurfmutter;
- Fig. 9: teils einen Längsschnitt und teils eine Ansicht einer Ausführungsform der Rohrklemmverbindung mit Stützkragen.

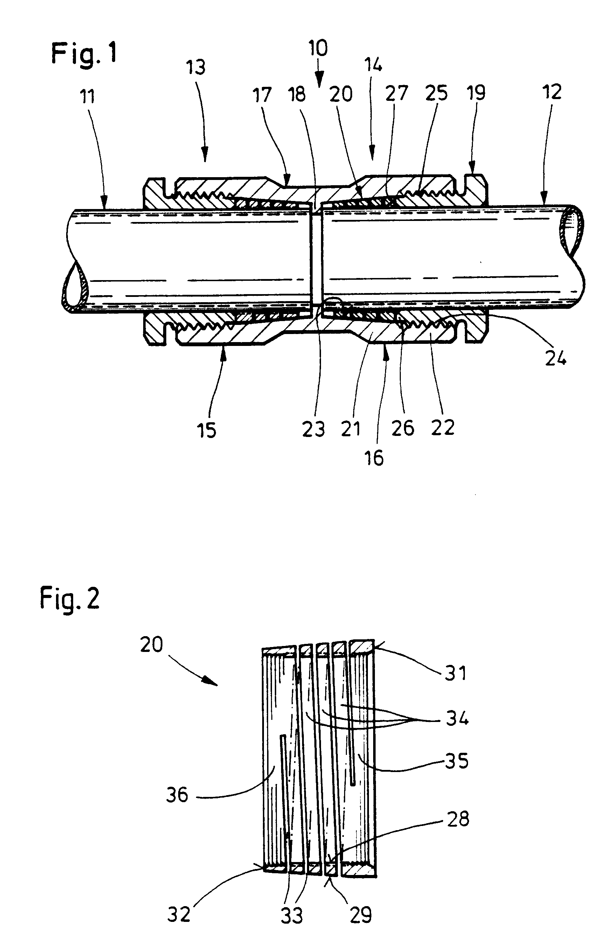

Die aus Fig. 1 ersichtliche Rohrkupplung 10 verbindet zwei Rohre 11 und 12 miteinander. Diese beiden Rohre sind aus einem Verbundwerkstoff hergestellt, nämlich aus glasfaserverstärktem Kunststoff, weshalb diese Rohre auch kurz als GFK-Rohre bezeichnet werden.

Die Rohrkupplung 10 weist für jedes der beiden Rohre 11 und 12 je eine Rohrklemmverbindung 13 bzw. 14 auf, von denen je eine an je einem der Enden der Rohrkupplung 10 in spiegelbildlicher Anordnung zur anderen angeordnet ist.

Die folgenden Ausführungen in Bezug auf die Rohrklemmverbindungen 13 und 14 gelten in gleicher oder zumindest in sinngemäßer Weise auch für andere Arten von Rohrkupplungen, etwa solche in T-form, oder für Armaturen unterschiedlichster Art, die mit wenigstens je einer Rohrklemmverbindung entsprechend den Rohrklemmverbindungen 13 und 14 ausgerüstet sind.

Jede der beiden Rohrklemmverbindungen 13 und 14 weist je ein Kupplungsgehäuse 15 bzw. 16 auf. Sie sind untereinander gleich gestaltet. Sie bilden je einen Teil, eines einstückigen Grundkörpers 17. Dieser ist aus Metall hergestellt, insbesondere aus Messing. Dafür kommen aber auch andere Werkstoffe in Betracht, wie sie bei Rohrleitungssystemen üblicherweise verwendet werden. Der Grundkörper 17 ist ein langgestreckter Hohlkörper mit näherungsweise zylindrischer Gestalt. In der Längsmitte des Grundkörpers 17, und damit am inneren ende eines jeden der beiden Kupplungskörper 15 und 16, ist am Grundkörper ein Innenbund 18 vorhanden. Dessen innengelegene kreiszylindrische Umfangsfläche hat eine lichte Weite, die zweckmäßigerweise nicht kleiner als die lichte Weite der miteinander zu kuppelnden GFK-Rohre 11 und 12 ist, sondern allenfalls etwas größer ist. Der Innenbund 18 stellt mit seinen beiden ebenen Stirnflächen, die normal zur Längsachse des Grundkörpers 17 ausgerichtet sind, einen Anschlag für die Stirnseiten der beiden GFK-Rohre 11 und 12 dar, der dazu dient, daß die beiden GFK-Rohre 11 und 12 nur je bis zur Mitte des Grundkörpers 17 in diesen hineingeschoben werden können und nicht etwa vom Bereich der einen Rohrklemmverbindung bis in den Bereich der anderen Rohrklemmverbindung hinübergeschoben werden können.

Im Hinblick darauf, daß die beiden Rohrklemmverbindungen 13 und 14 untereinander spiegelbildlich gleich ausgebildet sind, beschränkt sich die nachfolgende Erläuterung auf die in Fig. 1 rechts gelegene Rohrklemmverbindung 14, die entsprechend auch für die Rohrklemmverbindung 13 gilt.

Die Rohrklemmverbindung 14 weist neben dem Kupplungsgehäuse 16 als weitere Teile eine Überwurfschraube 19 und einen Klemmring 20 auf.

Der Kupplungskörper 16 weist zwei Längenabschnitte 21 und 22 auf. Die Innenfläche des an den Innenbund 18 anschließenden Längenabschnittes 21 wird durch eine sehr schlanke Innenkonusfläche 23 gebildet. Sie hat einen Neigungswinkel gegenüber der Längsachse des Kupplungskörpers 16 von zumindest annähernd 4,5°. Der zweite Längenabschnitt 22 des Kupplungskörpers 16 hat eine kreiszylindrische Innenfläche, die mit einem Muttergewinde 24 versehen ist. Dieses ist auf das Schraubengewinde 25 der Überwurfschraube 19 abgestimmt. Diese Gewinde sind im allgemeinen zylindrische Rohrgewinde, wie sie bei Rohrleitungssystemen mit Metallrohren üblich sind.

Die Überwurfschraube 19 is an ihrem außengelegenen Ende mit einem Außensechskant versehen. Am innengelegenen Ende weist die Überwurfschraube 19 einen gewindefreien zylindrischen Hals 26 auf, dessen freie Stirnseite eine ebene und rechtwinklig zur Längsachse des Kupplungskörpers 16 ausgerichtete Anlagefläche 27 für den Klemmring 20 bildet. Der Außendurchmesser des Halses 26 ist zumindest im Bereich seiner Stirnseite so bemessen, daß er im Betriebszustand, d.h. bei fest angezogener Überwurfschraube 19, die Innenkonusfläche 23 des Kupplungskörpers 16 noch nicht berührt. Die Länge des Halses 26 richtet sich vor allem nach den Maßtoleranzen und nach der Verformbarkeit der Rohre 11 und 12, die durch die Rohrkupplung 10 miteinander gekuppelt werden sollen.

Die Überwurfschraube 19 ist wie der Kupplungskörper 16 aus Metall, und zwar ebenfalls insbesondere aus Messing hergestellt. Das gleiche gilt für den Klemmring 20.

Der Klemmring 20 hat eine kreiszylindrische Innenseite 28. Auf seiner Außenseite weist er eine sehr schlanke Außenkonusfläche 19 auf. Deren Neigungswinkel gegenüber der Längsachse des Klemmringes 20 ist etwas kleiner, und zwar bis zu 1° kleiner, als der neigungswinkel der Innenkonusfläche 28 des Kupplungskörpers 16.

Die am hinteren Ende des Klemmringes 20 mit dem größeren Konusdurchmesser gelegene Stirnfläche dient als Anlagefläche 31 für die Anlage der Überwurfschraube 19, und zwar dren Anlagefläche 27. Daher ist die Anlagefläche 31 am Klemmring 20 ebenfalls eben und zumindest annähernd rechtwinklig zur Längsachse des Klemmringes ausgerichtet. Am vorderen Ende des Klemmringes 20 mit dem kleineren Konusdurchmesser ist die Stirnfläche 32 ebenfalls eben und zumindest annähernd rechtwinklig zur Längsachse des Klemmrings 20 ausgerichtet.

Die lichte Weite des Klemmringes 20 ist zumindest annähernd gleich dem Außendurchmesser der zu kuppelnden Rohre 11 und 12. Diese lichte Weite wird im folgende als nennweite der Rohrkupplung 10 bezeichnet.

Die axiale Länge des Klemmringes 20 beträgt zweckmäßigerweise zumindest annähernd das 0,5-fache seiner Nennweite.

Wie aus Fig. 2 zu ersehen ist, weist der Klemmring 20 in seinem mittleren Längenbereich einen schraubenförmig verlaufenden, in radialer Richtung durchgehenden Schlitz auf, der im folgenden als Wendelschlitz 33 bezeichnet wird. Der Windungssinn des Wendelschlitzes 33 ist entgegengesetzt zum Windungssinn des Muttergewindes 24 am Kupplungskörper 16 und des Schraubengewindes 25 an der Überwurfschraube 19. Dieser Wendelschlitz 33 hat zweckmäßigerweise vier volle Windungen, so daß der geschlitzte Längenabschnitt des Klemmrings 20 etwa in drei nebeneinander liegende volle Windungen 34 aufgeteilt ist. Der Wendelschlitz 33 endet in axialer Richtung sowohl am hinteren wie auch am vorderen Ende des Klemmringes 20 in einer gewissen Entfernung von der Stirnseite des Klemmringes, so daß am hinteren Ende ein Längenabschnitt 35 und am vorderen Ende ein Längenabschnitt 36 ungeschlitzt bleiben. Die axiale Erstreckung dieser ungeschlitzten Längenabschnitte 35 und 36 beträgt zumindest annähernd das 0,1-fache der Nennweite des Klemmringes 20. Die Steigung des Wendelschlitzes 33 beträgt damit zumindest annähernd das 0,10-fache der Nennweite des Klemmringes 20.

Der ungeschlitzte Längenabschnitt 35 am hineren Ende des Klemmringes 20 hat abweichend vom übrigen Teil des Klemmringes 20 eine kreiszylindrische Außenfläche, die sich in axialer Richtung mindestens bis zum Beginn des Wendelschlitzes 33 erstreckt, der aber auch geringfügig darüber hinausgehen kann.

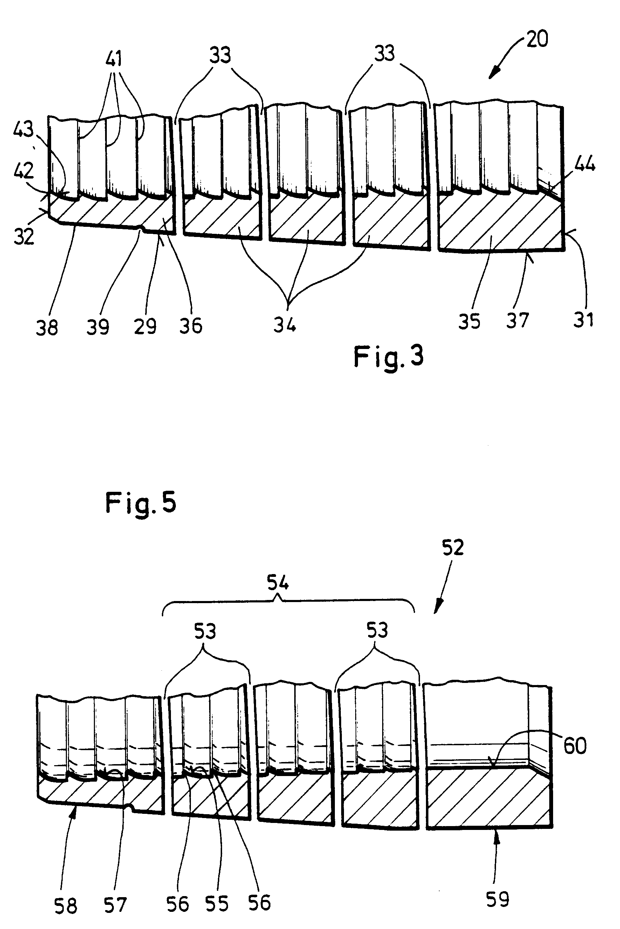

Bei der vergrößerten Ausschnittsdarstellung in Fig. 3 ist gegenüber dem normalen Klemmring 20 gemäß Fig. 2 insoweit eine Abwandlung in die Darstellung mit einbezogen, als im Bereich des ungeschlitzten vorderen Längenabschnittes 36 in einem an die vordere Stirnseite 32 anschließenden Abschnitt 38 die Außenfläche gegenüber der übrigen Außenkonusfläche 29 um ein gewisses Maß von zumindest annähernd 0,1 mm im Halbmesser einwärts abgesetzt ist. Die axiale Erstreckung dieses abgesetzten Abschnittes 38 beträgt vorzugsweise 2,0 mm. Als weiterer Teil dieser Abwandlung ist am Ende des abgesetzten Abschnittes 38 eine umlaufende Rille 39 vorhanden, die gegenüber dem abgesetzten Abschnitt 38 zumindest annähernd 0,1 mm tief ist und zumindest anähernd 0,5 mm breit ist. Die von der vorderen Stirnseite 32 am weitesten entfernt gelegene hintere Wand der Rille 39 schließt scharfkantig an die Außernkonusfläche 29 des Klemmringes an.

Wenn beim Klemmring 20 die abgewandelte Auführung mit dem abgesetzten Abschnitt 38 und der Rille 39 gewählt wird, ist darauf zu achten, daß der Wendelschlitz 33 in axialer Richtung zumindest annähernd 0,5 mm vor der Rille 39 endet, so daß am vorderen ungeschlitzten Längenabschnitt 36 des Klemmringes 20 ein nicht abgesetzter Abschnitt der Außenkonusfläche 29 von 0,5 mm Länge bestehen bleibt, der zwischen dem Wendelschlitz 33 und der Rille 39 sich über den gesamten Umfang des Klemmringes 20 erstreckt.

Bei der abgewandelten Ausführungsform des Klemmringes 20 dient der abgesetzte Abschnitt 38 dazu, ein Korrosionsschutzmittel aufzunehmen, das über den abgesetzten Abschnitt 38 hinaus auch auf der gesamten Stirnseite 32 angebracht wird. Beim Einschieben eines solchen Klemmringes in den Kupplungskörper 16 bleibt selbst beim Anziehen der Überwurfschraube 19 zumindest ein Teil der Kossosionsschutzschicht im Bereich des abgesetzten Abschnittes 38 an der Außenfläche haften, wobei das davon verdrängte Korrosionsschutzmittel sich in der Rille 39 ansammeln kann. Als Korrosionsschutzmittel kommen Polyäthylen, Polytetrafluoräthylen, Polyamid oder auch ein anderer thermoplastischer Kunststoff in Betracht, dessen Auswahl davon abhängt, gegen welches Fluid oder gegen welche Inhaltsstoffe, des Fluids das vordere Ende des Klemmringes 20 geschützt werden soll. Das Korossionsschutzmittel wird zweckmäßigerweise in pulvriger Ausgangsform im Wirbelsinterverfahren auf die zu schützenden Flächenbereiche aufgebracht.

Wie schon in Fig. 2 angedeutet ist und noch deutlicher in Fig. 3 dargestellt ist, weist der Klemmring 20 auf seiner kreiszylindrischen Innenseite eine Anzahl umlaufender, in sich geschlossener Ringrippen 41 auf, die in je einer Normalebene zu seiner Längsachse angeordnet sind. Diese Ringrippen 41 haben eine radiale Höhe von zumindest annähernd 0,4 mm. Sie haben untereinander einen axialen Abstand (oder axiale Teilung) der bevorzugt zwischen 1,2 und 1,4 mm liegt, wobei die kleiner Teilung bei kürzeren Ringen und kleinerer Nennweite und die größere Teilung bei längeren Klemmringen und größerer Nennweite gewählt wird. Die der Stirnseite 32 zugekehrte Vorderflanke 42 der Ringrippen 41 ist zumindest annähernd normal zur Längsachse des Klemmrings 20 ausgerichtet. Die Rückenflanke 43 ist von der scharfen Ringschneide aus bis zum Fuß der Vorderflanke der nächstfolgenden Ringrippe 41 zumindest annähernd stetig ausgerundet. Das gilt vor allem für die kleinere Längsteilung der Ringrippe 41. Bei größerer Teilung und vor allem bei größerer Nennweite, kann es zweckmäßig sein, die Krümmung der Rückenflanke 43 schon vor der nächst folgenden Vorderflanke in eine Kreiszylinderfläche auslaufen zu lassen.

Am hinteren Ende des Klemmringes 20 ist der ungeschlitzte Längenabschnitt 35 auf seiner Innenseite konisch angefast. Der Neigungswinkel der Anfasung 44 beträgt etwa 30° gegenüer der Längsachse des Klemmrings 20. Die axiale Erstreckung der Anfasung 44 beträgt etwa 1,0 mm. Durch diese Anfasung 44 wird das Einschieben des zu kuppelnden Rohres in den Klemmring 20 erleichtert.

Die Rohrkupplung 10 wird zweckmäßigerweise bereits vormontiert ausgeliefert. Dabei ist in jedem Kupplungskörper 15 und 16 je ein Klemmring 20 lose eingesetzt und die Überwurfschraube 19 gerade so weit in den Kupplungskörper 16 eingeschraubt, daß ihre stirnseitige Anlagefläche 27 an der stirnseitigen Anlagefläche 31 des Klemmringes 20 anliegt. Die Windungen 34 des Klemmringes 20 sollten dabei noch nicht aneinander anliegen oder, mit anderen Worten, der Wendelschlitz 33 wenigstens noch zum Teil offen sein. Die zu kuppelnden Rohre 11 und 12 werden in den zugehörigen Kupplungskörper 15 bzw. 16 eingeschoben, bis ihre Stirnseite an dem innenbund 18 lose anliegt. Wenn anschließend die Überwurfschraube 19 in den Kupplungskörper 16 hineingeschraubt wird, legen sich zunächst die Windungen 34 des Klemmringes 20 aneinander an. Danach wird der vordere ungeschlitzte Längenabschnitt 34 des Klemmringes 20 entlang der Innenkonusfläche 23 des Kupplungskörpers 16 axial verschoben. Dabei verengt er sich aufgrund seiner geringen Wanddicke zunächst elastisch, später aber zusätzlich auch plastisch. Entsprechend dieser Verengung schneiden die Ringrippen 41 auf der Innenseite des Längenabschnittes 36 in die Außenseite des Rohres 12 ein und graben sich dabei in die äußere Schicht des GFK-Rohres ein. In dem Maße, in dem der axiale Widerstand beim Einpressen des vorderen ungeschlitzten Längenabschnittes 36 zunimmt, nimmt die Reibkraft zwischen der Anlagefläche 31 am Klemmring und der Anlagefläche 27 an der Überwurfschraube 19 zu. Dadurch werden die an den hinteren ungeschlitzten Längenabschnitt 35 anschließenden Windungen 34 des Klemmringes 20 von vorn nach hinten in zunehmendem Maße mitgenommen, wobei die Windungen sich verengen und die auf ihrer Innenseite vorhandenen Ringrippen 41 sich ebenfalls in zunehmendem Maße in die Außenseite des GFK-Rohres 12 eingraben. Sobald dieser Vorgang abgeschlossen ist, ist der Endabschnitt des Rohres 12 mit der Rohrkupplung 10 dicht und fest verbunden.

Die bisherigen Erläuterungen waren auf die Verbindung von GFK-Rohren Abgestellt, die sich mit verhältnismäßig engen Maßtoleranzen herstellen lassen und die eine verhältnismäßig geringe elastische Dehnung aufweisen. Rohre, die ausschließlich aus einem thermoplastischen Kunststoff hergestellt sind, bei denen also eine Glasfaserarmierung fehlt, haben erstens größere Maßtoleranzen und zweitens eine größere Dehnung.

Für das Verbinden solcher Rohre kann es zweckmäßig sein, die Rohrklemmverbindung in einer abgewandelten Ausführungsform zu verwenden. Bei ihr ist der Neigungswinkel der Innenkonusfläche am Kupplungsgehäuse größer, und zwar bis zu 10°, damit die Innenkonusfläche am Kupplungskörper, aber auch die Länge des Muttergewindes nicht übermäßig lang ausgeführt werden müssen. Infolge des größeren Neigungswinkels der beiden Konusflächen kann es weiterhin zweckmäßig sein, anstelle des normalen Rohrgewindes zwischen dem Kupplungskörper und der Überwurfschraube ein Feingewinde zu verwenden, damit bei der Überwurfschraube die Übersetzung zwischen der Umfangskraft am Außensechskant und ihrer Vorschubkraft erhöht wird, um die höhere Radialkraft beim Verengen des vordren ungeschlitzten Längenabschnittes des Klemmringes wieder auszugleichen.

Eine andere Abwandlung der Rohrklemmverbindung kann darin bestehen, daß sowohl der Kupplungskörper, wie auch der Klemmring in GFK-Ausführung verwendet werden. Das kann dann zweckmäßig, wenn nicht gar norwendig, sein, wenn das durch das Rohrleitungssystem hindurchgeleitete Fluid die Verwendung von Metallen nicht erlaubt oder den Übergang zu Kunststoffteilen nahelegt. Bei GFK-Verbundwerkstoffen kann die dem Fluid ausgesetzte innerste Wandbeschichtung in weiten Grenzen an die Erfordernisse des Fluids angepaßt werden, ohne daß die übrigen Schichten des Verbundwerkstoffes in nennenswertem Umfange verändert werden müssen.

Der Übergang zur GFK-Ausführung kann auch dann angezeigt sein, wenn, insbesondere bei einer höheren Anzahl von Verbindungsstellen und/oder von Armaturen im Rohrleitungssystem, das Gesamtgewicht des Rohrleitungssystems oder auch nur das "Metallgewicht" der Rohrklemmverbindungen sehr hoch wird oder wenn aus sonstigen Gründen die Verringerung des Metallanteils im Rohrsystem erwünscht oder notwendig ist.

Bei der GFK-Ausführung der Rohrklemmverbindung ist es von großem Vorteil, wenn am Klemmring im Bereich der Ringrippen die Glasfaserarmierung zumindest stärker oder besser noch vollständig in Umfangsrichtung ausgerichtet ist. Darüber hinaus ist es zweckmäßig, im Werkstoff der Ringrippen den Glasfaseranteil größer als im Werkstoff der übrigen Teile des Klemmringes zu wählen. Dadurch erhalten die Ringrippen eine höhere Formfestigkeit, die es ihnen trotz der GFK-Ausführung ermöglicht, sich ausreichend weit in die Außenseite, d.h. in die Außenschicht, der zu kuppelnden Rohre einzugraben und diese sowohl gut abzudichten wie auch sicher festzuhalten.

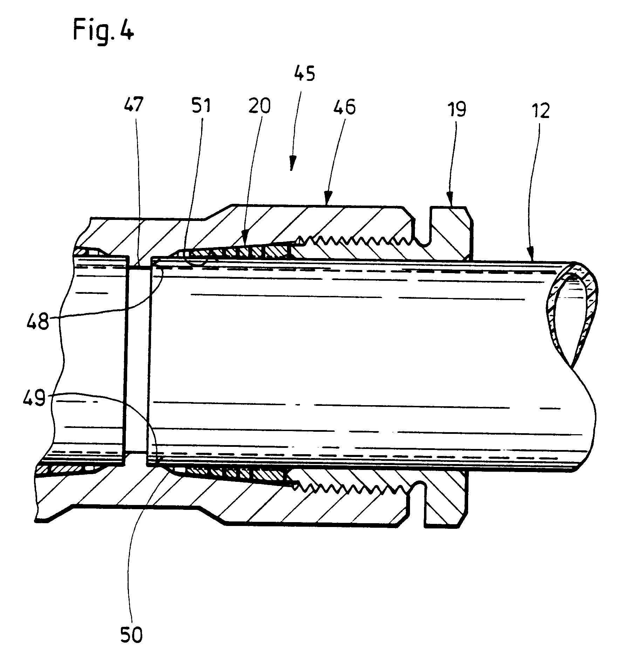

Aus Fig. 4 ist eine Rohrklemmverbindung 45 als weitere Ausführungsform zu ersehen, bei der das Kupplungsgehäuse 46 gegenüber dem Kupplungsgehäuse 16 der Grundversion zum Teil abgewandelt ist.

An den Bund 47, genauer gesagt an dessen ebene Stirnfläche 48, schließt zunächst eine Kreiszylinderfläche 49 und daran eine Innenkonusfläche 50 an. Die Kreiszylinderfläche 49 hat eine gewisse axiale Erstreckung, die zweckmäßigerweise nicht kleiner als 2 mm ist. Ihre lichte Weite ist zumindest annähernd gleich oder gerinfügig größer als die Nennweite der Rohrklemmverbindung 45 oder des Außendurchmessers des Rohres 12. Diese Kreiszylinderfläche 49 dient als Führungsfläche für das vordere Ende des Rohres 12, insbesondere dann, wenn es in die bereits vormontierte Rohrklemmverbindung 45 eingeschoben wird. Dadurch wird sichergestellt, daß das Rohr 12 an seinem vorderen Ende mittig zur Längsachse des Kupplungsgehäuses 46 geführt ist. Die Innenkonusfläche 50 dient als Einführkonus für das vordere Ende des Rohres 12. Der Neigungswinkel dieser Innenkonusfläche 50 liegt daher vorzugsweise im Winkelbereich von 30°-45°. An diesen Einführkonus schließt bei der Rohrklemmverbindung 45 die Innenkonusfläche 51 für den Klemmring 20 an, die gleich gestaltet ist wie die entsprechende Innenkonusfläche 23 am Kupplungsgehäuse 16 (Fig. 1). Auch die übrigen Teile des Kupplungsgehäuses 46 sind, ebenso wie die Überwurfschraube 19, gleich den entsprechenden Teilen der Ausführungsform nach Fig. 1.

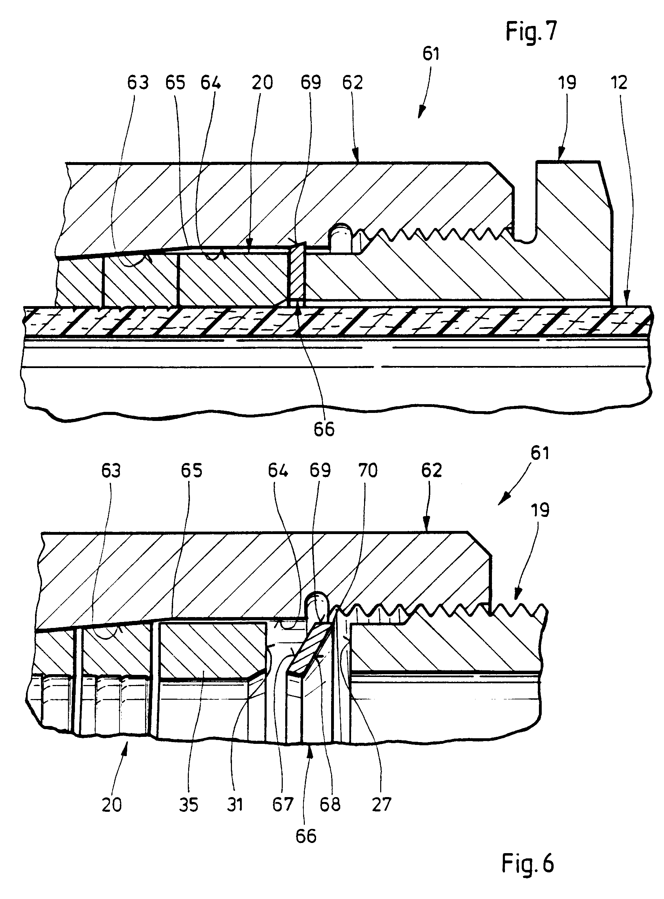

Aus Fig. 5 ist ein Klemmring 52 zu ersehen, der gegenüber dem Klemmring 52 abgewandelt ist. In dem durch den Wendelschlitz 53 geschlitzten mittleren Längenabschnitt 54 des Klemmringes 52 nimmt die radiale Tiefe der ringförmigen Ausnehmungen 55 zwischen je zwei Ringrippen 76 vom vorderen Ende des Längenabschnittes 54 bis zu seinem hinteren Ende hin von einem Größtwert bis auf Null hin ab. Der Größtwert der Tiefe der Ausnehmungen 55 ist zumindest annähernd gleich der radialen Tiefe der entsprechenden Ausnehmungen 57 im vorderen ungeschlitzten Längenabschnitt 58 des Klemmringes 52. Da die radiale Tiefe de Ausnehmungen 55 am hinteren Ende des geschlitzten Längenabschnittes 54 den Wert Null erreicht hat, sind im hinteren ungeschlitzten Längenabschnitt 59 des Klemmringes 52 an seiner Innenseite keine Ausnehmungen und damit auch keine Ringrippen mehr vorhanden. Diese Innenseite bildet daher eine glatte Kreiszylinderfläche 60.

Aus Fig. 6 und 7 ist eine Rohrklemmverbindung 61 als weiteres Ausführungsbeispiel zu ersehen. Bei der Rohrklemmverbindung 61 schließt auf der Innenseite des Kupplungskörpers 62 am außen gelegenen Ende der Innekonusfläche 63 für den Klemmring 20 eine Kreiszylinderfläche 64 an, deren lichte Weite größer als der Außendurchmesser des hinteren Endes des Klemmringes 20 ist, die also größer als der Außendurchmesser des ungeschlitzten hinteren Längenabschnittes 35 des Klemmringes 20 ist. der Außendurchmesser dieser Kreiszylinderfläche 64 ist auf die Innenkonusfläche 63 so abgestimmt, daß die Übergangsstelle 65 zwischen der Innekonusfläche 63 und der Kreiszylinderfläche 64 innerhalb desjenigen Längenabschnittes des Kupplungskörpers 62 gelegen ist, den der Klemmring 20 nach dem Anziehen der Überwurfschraube 19 einnimmt (Fig. 7). Die axiale Erstreckung der Kreiszylinderfläche 64 ist, ausgehend von er Übergangsstelle 65, so bemessen, daß sie bei ungespannt eingesetztem Klemmring 20 noch über das hintere Ende des Klemmringes 20 hinaus übersteht (Fig. 6).

Zwischen der hinteren Stirnfläche 31 des Klemmringes 20 und der vordren Stirnfläche 27 der Überwurfschraube 19 ist ein Stemmring 66 eingelegt oder eingefügt. Die lichte Weite des Stemmringes 66 ist nicht kleiner als die Nennweite des Klemmringes 20, besser sogar nicht kleiner als die lichte Weite der Überwurfschraube 19. Der stemmring 66 hat zwei Stirnflächen 67 und 68, die parallel zueinander verlaufen. Der Stemmring 66 ist kegelförmig geprägt, so daß seine beiden Stirnflächen 67 und 68 die Form der Mantelfläche eines Kegelstumpfes haben. Die Neigung der Mantellinie der beiden kegelstumpfförmigen Stirnflächen 67 und 68 liegt im Bereich von 60°-75° und beträgt vorzugsweise etwa 68°. Die Umfangsfläche 69 des Stemmringes 66 ist im ungespannten Ruhezustand des Stemmringes 66 (Fig. 6) als Kreiszylinderfläche in Bezug auf die Mittelachse des Stemmringes 66 ausgebildet. Dabei ist vor allem die Umfangskante 70 zwischen der Umfangsfläche 69 und der innengelegenen Stirnfläche 68 scharfkantig ausgebildet.

Beim Anziehen der Rohrklemmverbindung 61 wird der Stemmring 66 von der Überwurfschraube 19 zunächst gegen den Klemmring 20 gedrückt und mit diesem zusammen eine gewisse Strecke in den Kupplungskörper 62 hineingeschoben (Fig. 7). Sobald der Klemmring 20 an seinem nicht dargestellten vorderen Ende sich so weit verengt hat, daß er das Rohr 12 fest und dicht einspannt und daher am hinteren Ende des Klemmringes 20 der Verschiebewiderstand auf einen höheren Wert ansteigt, wird der Stemmring 66 zwischen der hinteren Stirnfläche 31 des Klemmringes 20 und der vorderen Stirnfläche 27 der Überwurfschraube 19 flachgedrückt (Fig. 7), wobei die Umfangsfläche 69 nach außen gedrückt wird und ihre Umfangskante 70 sich in die Kreiszylinderfläche 64 des Kupplungskörpers 62 eingräbt. Dadurch wird der Stemmring 66 gewissermaßen mit dem Kupplungskörper 62 verstemmt. Selbst wenn die Überwurfschraube 19 sich einmal lockern würde, würde der Stemmring 66 dafür sorgen, daß der Klemmring 20 sich in axialer Richtung nicht ausdehnen kann, weil die von ihm ausgehende axiale Kraft dafür sorgt, daß der Stemmring 66 sich noch stärker in die Kreiszylinderfläche 64 des Kupplungskörpers 62 eingräbt.

Die Klemmverbindung 61 kommt für solche Rohrverbindungen in Betracht, die nach ihrer Montage nicht mehr gelöst werden müssen und bei denen sogar zusätzlich gefordert wird, daß eine Sicherung gegen unbeabsichtigtes Lösen der Rohrklemmverbindung, aus welchen Gründen auch immer, vorhanden ist.

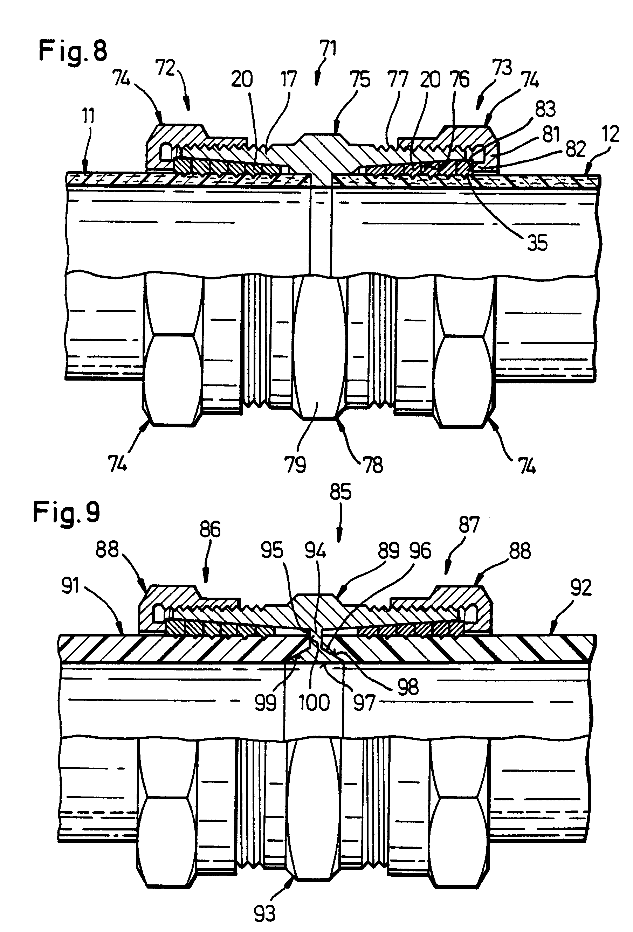

Aus Fig. 8 ist eine Rohrkupplung 71 zu ersehen, die gegenüber den bisher erläuterten Rohrkupplungen, etwa den Rohrkupplungen nach Fig. 1 und Fig. 4, im Hinblick darauf abgewandelt ist, daß ihre beiden Rohrklemmverbindungen 72 und 73 nicht mit Überwurfschrauben sondern mit je einer Überwurfmutter 74 ausgerüstet sind. Dadurch fehlen am Kupplungsgehäuse 75 an beiden Enden diejenigen Längenabschnitte, die bei dem Kupplungsgehäuse 46 das Innengewinde für die Überwurfschrauben aufweisen. Davon abgesehen ist das Kupplungsgehäuse 75 in seinem Inneren im Bereich des Klemmringes 20 weitgehend in der gleichen Weise ausgebildet, wie das Kupplungsgehäuse 46 (Fig. 4), auf dessen Erläuterung deshalb Bezug genommen wird.

Am Kupplungsgehäuse 75 hat die Innenkonusfläche 76 für den Klemmring 20 eine axiale Länge, die kürzer als die Innenkonusfläche 51 am Kupplungsgehäuse 46 ist. Die Innenkonusfläche 76 ist so kurz, daß in der Betriebsstellung oder Klemmstellung des Klemringes 20 (Fig. 8) sein hinterer ungeschlitzter Längenabschnitt 35 aus dem Kupplungsgehäuse 75 zum Teil herausragt.

Etwa im gleichen Längenabschnitt wie die Innenkonusfläche 76 ist auf der Außenseite des Kupplungsgehäuses 75 das Außengewinde 77 für die Überwurfmuttern 74 angeordnet. Zwischen den beiden Längenabschnitten mit dem Innengewinde 77 für die beiden Überwurfmuttern 74 weist das Kupplungsgehäuse 75 einen Längenabschnitt 78 auf, der mit Schlüsselflächen 79 versehen ist, die als Sechskantflächen oder als Achtkantflächen ausgebildet sind.

Die Überwurfmutter 74 weist einen kreisringförmigen Bund 81 auf, dessen lichte Weite nicht kleiner als der nenndurchmesser des zu kuppelnden Rohres 12 ist und zweckmäßigerweise sogar geringfügig größer ist. An der inneren Stirnfläche des Bundes 81 schließt in axialer Richtung ein kragenförmiger Fortsatz 82 an. Der Fortsatz 82 hat die gleiche lichte Weite wie der Bund 81. Der Außendurchmesser des Fortsatzes 82 ist nicht größer als der Außendurchmesser des hinteren ungeschlitzten Längenabschnittes 35 des Klemmringes 20. Die axiale Länge des Fortsatzes 82 liegt im allgemeinen zwischen 0,5 mm und 2,0 mm. Die Stirnfläche des kragenförmigen Fortsatzes 82 bildet die Anlagefläche 83 für den Klemmring 20. Durch den kragenförmigen Fortsatz 82 wird ein größerer axialer Betätigungsweg für die Überwurfmutter 74 erreicht, weil im Bedarfsfall der Fortsatz 82 bis in das Kupplungsgehäuse 75 hineinbewegt werden kann, so daß die Überwurfmutter 74 auch dann noch auf die hintere Anlagefläche des Klemmringes 20 eine Axialkraft ausüben kann, wenn der hintere Längenabschnitt 35 des Klemmringes 20 schon vollständig in das Kupplungsgehäuse 75 eingetaucht ist. Dieser Fall könnte dann einmal eintreten, wenn die Fertigungstoleranzen aller zusammenwirkenden Teile, und zwar insbesondere diejenigen der Durchmessermaße der Innenkonusfläche 76, des Klemmringes 20 und des Rohres 12, in ungünstiger Weise zusammentreffen.

Aus Fig. 9 ist eine weitere Abwandlung der Rohrklemmverbindung zu ersehen. Die Rohrkupplung 85 ist äußerlich gleich der Rohrkupplung 71 (Fig. 8) gestaltet. Ihre beiden Rohrklemmverbindungen 86 und 87 weisen ebenfalls je eine Überwurfmutter 88 auf, die gleich den Überwurfmuttern 74 gestaltet sind. Das Kupplungsgehäuse 89 ist jedoch im Inneren, und zwar im mittleren Längenabschnitt, gegenüber dem Kupplungsgehäuse 75 abgewandelt. Das ist im Hinblick darauf geschehen, daß die Rohrkupplung 85 für das Kuppeln von Kunststoffrohren 91 und 92 bestimmt ist, die aus einem thermoplastischen Kunststoff hergestellt sind. Solche Rohre haben wegen der geringeren Festigkeit ihres Werkstoffes eine erheblich größere Wanddicke, als das bei den GFK-Rohren 11 und 12 der Fall ist.

Das Kupplungsgehäuse 89 weist in seinem mittleren Längenabschnitt 93 auf der Innenseite einen Bund 94 auf, dessen lichte Weite nicht kleiner als die lichte Weite der beiden Kunststoffrohre 91 und 92. An jeder Stirnseite des Bundes 94 hat ein äußerer Ringbereich eine zumindest annähernd ebene Stirnfläche 95, die normal zur Längsachse des Kupplungsgehäuse 89 ausgerichtet ist. An dem daran nach innen anschließenden inneren Ringbereich ist nach beiden Seiten hin je ein axialer Fortsatz 96 angeformt. Die innere Umfangsfläche 97 der Fortsätze 96 ist zumindest annähernd als Kreiszylinderfläche ausgebildet, deren lichte Weite gleich der lichten Weite des Bundes 94 ist. Die äußere Umfangsfläche 98 ist als Mantelfläche eines Kegelstumpfes ausgebildet, dessen Mantellinien gegenüber der Längsachse des Kupplungsgehäuse 89 einen Neigungswinkel zwischen 20° und 45° haben, wobei in Fig. 9 ein Neigungswinkel von 30° dargestellt ist.

Jedes der beiden Rohre 91 und 92 ist an dem mit der Rohrkupplung 85 zusammenwirkenden Ende auf seiner Innenseite mit einer ausnehmung 99 versehen, die auf den axialen Fortsatz 96 abgestimmt ist und die dementsprechend als Mantelfläche eines hohlen Kegelstumpfes erscheint.

Wie aus Fig. 9 zu ersehen ist, hat der Fortsatz 96 an der Übergangsstelle zum Bund 94, d.h. an seiner dicksten Stelle, einen Außendurchmesser, der kleiner als der Außendurchmesser der Rohre 91 und 92 ist. Dadurch bleibt an der Stirnseite der Rohre 91 und 92 außerhalb der kegelstumpfförmigen Ausnehmung 99 noch eine ebene kreisringförmige Stirnfläche 100 stehen.

Damit die Ausnehmung 99 am Rohr 91 oder. 92 mit dem Fortsatz 96 am Kupplungsgehäuse 89 in der richtigen Weise zusammenwirken kann und dabei der Fortsatz 96 als Stützkragen für das betreffende Rohr wirken kann, ist es zweckmäßig, daß beim Herstellen der Ausnehmung 99, etwa mittels eines kegeligen Senkwerkzeuges, zugleich auch die Stirnfläche 100 bearbeitet wird. Dadurch wird sichergestellt, daß die Stirnfläche 100 glatt und eben ist und daß nicht vom Absägen des Rohres irgendwelche Unregelmäßigkeiten zurückgeblieben sind, die verhindern, daß des Rohrende bis zur Anlage seiner Ausnehmung 99 am Fortsatz 96 zum Bund 94 hingeschoben werden kann. Am einfachsten wird das dadurch erreicht, daß das kegelige Senkwerkzeug mit einem ebenen Stirnsenker kombiniert wird und daß in einem einzigen Arbeitsgang die Ausnehmung 99 hergestellt wird und zugleich die Stirnfläche 100 bearbeitet wird. Dabei ist darauf zu achten, daß die Ausnehmung 99 nicht tiefer wird, als der Fortsatz 96 lang ist, damit beim Einschieben des Rohres die Ausnehmung 99 schon a Fortsatz 96 aufsitzt, ehe die Stirnfläche 100 am Bund 94 anstoßen kann.

Bei der Ausführungsform der Rohrklemmverbindungen nach Fig. 9 wird das Rohrende durch den kegeligen Fortsatz 96 innen zentriert. Daher kann die äußere Führungsfläche entfallen, die bei der Ausführungsform nach Fig. 4 durch die Kreiszylinderfläche 49 gebildet wird, der die Innenkonusfläche 50 vorausgeht. In soweit entspricht die Ausführungsform nach Fig. 9 der Ausführungsform nach Fig. 1.

Der axiale Fortsatz am Bund 94 kann anstelle der kegelstumpfförmigen Umfangsfläche 98 auch eine kreiszylindrische Umfangsfläche haben, wobei aber zweckmäßigerweie der Außenrand an der freien Stirnseite des Fortsatzes angefast wird, damit eine Art Einführkonus entsteht. Entsprechend der Zylinderform des Fortsatzes muß dann auch die Ausnehmung auf der Innenseite der Rohre kreiszylindrisch ausgebildet werden. Die Zylinderform der beiden Anlageflächen ist jedoch empfindlicher gegenüber Fertigungstoleranzen der Durchmessermaße.

## Patentansprüche

1. Rohrklemmverbindung mit den Merkmalen:
- ein hohler Kupplungskörper weist für die Anlage eines Klemmringes eine Innenkonusfläche auf, deren großer Durchmesser der freien Stirnseite des Kupplungskörpers and der Mündung seines Hohlraumes zugekehrt ist,
- der Kupplungskörper weist im Anschluß an seine freie Stirnseite ein mittig zur Innenkonusfläche angeordnetes Innengewinde für eine Überwurfschraube oder ein Außengewinde für eine Überwurfmutter auf,
- die Überwurfschraube oder Überwurfmutter weist eine stirnseitige Anlagefläche für den Klemmring auf,
- der Klemmring weist auf seiner kreiszylindrischen Innenseite eine Anzahl umlaufender, in sich geschlossener Ringrippen auf, die in je einer Normalebene zu seiner Längsachse angeordnet sind,
- die Ringrippen weisen am innen gelegenen Rand eine scharfe Kante auf,
- der Klemmring weist auf seiner Außenseite eine Außenkonusfläche auf, die zumindest näherungsweise auf die Innenkonusfläche des Kupplungskörpers abgestimmt ist,
**gekennzeichnet** durch die Merkmale:
- die Innenkonusfläche (23) am Kupplungskörper (16) und die Außenkonusfläche (29) am Klemmring (20) haben einen sehr kleinen Neigungswinkel gegenüber der Längsachse,
- am Klemmring (20) ist die Anlagefläche (31) für die Überwurfschraube (19) oder Überwurfmutter und an der Überwurfschraube (19) oder Überwurfmutter ist die Anlagefläche (27) für den Klemmring (20) zumindest annähernd eben ausgebildet und normal zur Längsachse des Klemmrings (20) ausgerichtet,
- der Klemmring (20) weist einen schraubenförmig verlaufenden, radial durchgehenden Wendelschlitz (33) auf, der in axialer Richtung am vorderen Ende des Klemmrings (20) mit dem kleineren Konusdurchmesser in einer gewissen Entfernung von der Stirnseite (32) des Klemmringes (20) endet,
- der Windungssinn des Wendelschlitzes (33) ist entgegengesetzt zum Windungssinn des Gewindes zwischen dem Kupplungskörper (16) und der Überwurfschraube (19) oder Überwurfmutter.

2. Rohrklemmverbindung nach Anspruch 1,
**gekennzeichnet** durch die Merkmale:
- der Klemmring (20) weist auch an seinem hinteren Ende mit dem größeren Konusdurchmesser einen Längenabschnitt (35) von einer gewissen Länge auf, der ungeschlitzt ist,
- vorzugsweise weist dieser ungeschlitzte hintere Längenabschnitt (35) des Klemmringes (20) eine kreiszylindrische Außenfläche (37) auf.

3. Rohrklemmverbindung nach Anspruch 1 und/oder Anspruch 2
**gekennzeichnet** durch die Merkmale:
- die Innenkonusfläche (23) des Kupplungskörpers (16) hat einen Neigungswinkel gegenüber seiner Längsachse der zumindest annähernd 4,5° beträgt,
- die Außenkonusfläche (29) des Klemmringes (20) hat einen Neigungswinkel gegenüber seiner Längsachse der bis zu 1° kleiner als der Neigungswinkel der Innenkonusfläche (23) des Kupplungskörpers (16) ist.

4. Rohrklemmverbindung nach einem oder mehreren der Ansprüche 1 bis 3,
**gekennzeichnet** durch die Merkmale:
- der ungeschlitzte Längenabschnitt (36) am vorderen Ende des Klemmringes (20) hat eine axiale Erstreckung, die mindestens gleich dem axialen Abstand zweier einander benachbarter Ringrippen (41) auf der Innenseite des Klemmringes (20) ist,
- bevorzugt beträgt die axiale Erstreckung des ungeschlitzten Längenabschnittes (36) am vorderen Ende des Klemmringes (20) zumindest annähernd das 0,1-fache der lichten Weite (Nennweite) des Klemmringes (20) (Nennweite) und zugleich Außendurchmesser des Rohres (12)).

5. Rohrklemmverbindung nach einem oder mehreren der Ansprüche 1 bis 3
**gekennzeichnet** durch die Merkmale:
- die Ringrippen (41) haben eine radiale Höhe von zumindest annähernd 0,4 mm,
- die Ringrippen (41) haben bevorzugt einen axialen Abstand zwischen 1,2 und 1,4 mm,
- bevorzugt ist die der vorderen Stirnseite (32) zugekehrte Vorderflanke (42) der Ringrippen (41) normal zur Längsachse des Klemmrings (20) ausgerichtet und die Rückenflanke (43) von der schargen Kante der Ringrippe (41) aus bis zum Grund de vorderflanke (42) der nachfolgenden Ringrippe (41) im Längsschnitt zumindest annähernd stetig konkav ausgerundet.

6. Rohrklemmverbindung nach einem oder mehreren der Ansprüche 1 bis 4,
**gekennzeichnet** durch das Merkmal:
- der ungeschlitzte Längenabschnitt (35) am hinteren Ende des Klemmringes (20) hat eie axiale Erstreckung, die zumindest annähernd das 0,1-fache der Nennweite des Klemmringes (20) ist.

7. Rohrklemmverbindung nach einem oder mehreren der Ansprüche 1 bis 5,
**gekennzeichnet** durch die Merkmale:
- der Wendelschlitz (33) hat 4 volle Windungen,
- die Steigung des Wendelschlitzes (33) beträgt vorzugsweise das 0,1-fache der Nennweite.

8. Rohrklemmverbindung nach einem oder mehreren der Ansprüche 1 bis 6,
**gekennzeichnet** durch das Merkmal:
- der Kupplungskörper (16) und der Klemmring (20) sind aus einem Metall hergestellt, dessen Festigkeit höher als diejenige des Werkstoffes der Außenseite des zu kuppelnden Rohres (12) oder zumindest dessen Außenseite ist.

9. Rohrklemmverbindung Nach anspruch 7,
**gekennzeichnet** durch die Merkmale:
- der Klemmring (20) ist im Bereich des ungeschlitzten vorderen Längenabschnittes (36) in einem an die vordere Stirnseite (32) anschließenden Abschnitt (38) seiner Außenkonusfläche (29) parallel zu dieser um ein gewisses Maß einwärts abgesetzt,
- das Untermaß dieses abgesetzten Abschnittes (38) gegenüber der übrigen Außenkonusfläche (29) beträgt vorzugsweise 0,1 mm im Halbmesser,
- die axiale Erstreckung des abgesetzten Abschnittes (38) beträgt vorzugsweise 2,0 mm,
- bevorzugt schließt an den abgesetzten Abschnitt (38) eine umlaufende Rille (39) an, die vorzugsweise gegenüber dem abgesetzten Abschnitt (38) 0,1 mm tief ist und die vorzugsweie 0,5 mm breit ist,
- die hinten gelegene Wand der Rille (39) schließt scharfkantig an die Außenkonusfläche (29) des Klemmringes (20) an,
- die vordere Stirnseite (32) des Klemmringes (20) ist vollständig und er abgesetzte Abschnitt (38) ist bis annähernd zur Rille (39) hin mit einem Korrosionsschutzmittel beschichtet.
- der Wendelschlitz (33) endet am vorderen Ende des Klemmringes (20) zumindest annähernd 0,5 mm vor der Rille (39).

10. Rohrklemmverbindung nach Anspruch 8,
**gekennzeichnet** durch die Merkmale:
- das Korrosionsschutzmittel besteht aus Polyäthylen, Polytetrafluroäthylen, Polyamid oder aus einem anderen thermoplastischen Kunststoff,
- das Korrosionsschutzmittel ist vorzugsweise in pulverförmiger Ausgangsform im Wirbelsinterverfahren auf dem Klemmring (20) aufgebracht.

11. Rohrklemmverbindung nach einem doder mehreren der Ansprüche 1 bis 9,
**gekennzeichnet** durch das Merkmal:
- der Klemmring und vorzugsweise auch der Kupplungskörper sind aus Kunststoff, insbesondere aus glasfaserverstärktem Kunststoff (GFK), hergestellt.

12. Rohrklemmverbindung nach Anspruch 11 aus GFK,
**gekennzeichnet** durch die Merkmale:
- am Klemmring ist im Bereich der Ringrippen die Glasfaserarmierung in Umfangsrichtung ausgerichtet,
- vorzugsweise ist im Werkstoff der Ringrippen der Glasfaseranteil größer als im Werkstoff der übrigen Teile des Klemmringes.

13. Rohrklemmverbindung nach einem oder mehreren der Ansprüche 1 bis 12,
**gekennzeichnet** durch die Merkmale:
- der Klemmring (20) ist an seinem hinteren Ende auf der Innenseite angefast,
- die Anfasung (44) hat vorzugsweise einen Neigungswinkel von 30° gegenüber der Längsachse des Klemmringes (20) und vorzugsweie eine axiale Erstreckung von 1,0 mm.

14. Rohrklemmverbindung nach einem oder mehreren der Ansprüche 1 bis 13,
**gekennzeichnet** durch die Merkmale:
- der Klemmring (20) ist an seinem vorderen Ende auf der Außenseite angefast,
- die Anfasung (45) hat vorzugsweise einen Neigunswinkel von 30° gegenüber der Längsachse des Klemmringes (20) und vorzugsweie eine axiale Erstreckung von 0,5 mm.

15. Rohrklemmverbindung nach einem oder mehreren der Ansprüche 1 bis 14,
**gekennzeichnet** durch die Merkmale:
- am Kupplungskörper (62) schließt an die Innenkonusfläche (63) für den Klemmring (20) eine Kreiszylinderfläche (64) an, deren lichte Weite größer als der Außendurchmesser des hinteren Endes des Klemmringes (20) ist,
- die Übergangsstelle (65) zwischen der Innenkonusfläche (63) und der Kreiszylinderfläche (64) ist innerhalb des Längenabschnittes des Kupplungskörpers (62) gelegen, den der Klemmring (20) nach dem Anziehen der Überwurfschraube (19) oder Überwurfmutter einnimmt,
- zwischen der hinteren Stirnfläche (31) des Klemmringes (20) und der vorderen Anlagefläche (27) der Überwurfschraube (19) oder Überwurfmutter ist ein Stemmring (66) eingefügt, dessen lichte Weite nicht kleiner als die Nennweite des Klemmringes (20) ist und dessen Außendurchmesser im ungespannten Ruhezustand zumindest annähernd gleich der lichten Weite der Kreiszylinderfläche (64) am Kupplungskörper (62) ist,
- die beiden Stirnflächen (67; 68) des Stemmringes (66) verlaufen parallel zueinander und haben die Form der Mantelfläche eines Kegelstumpfes,
- die Neigung der Mantellinien der bieden kegelstumpfförmigen Stirnflächen (67; 68) des Stemmringes (66) gegenüber der Mittelachse des Stemmringes (66) liegt vorzugsweise im Bereich von 60° - 75°,
- die Umfangsfläche (69) des Stemmringes (66) ist im ungespannten Ruhezustand als Kreiszylinderfläche ausgebildet und zumindest die Umfangskante (70) am Übergang zur innengelegenen Stirnfläche (68) des Stemmringes (66) scharfkantig ausgebildet.

16. Rohrklemmverbindung nach einem ode mehreren der Ansprüche 1 bis 15,
**gekennzeichnet** durch das Merkmal:
- in dem geschlitzen Längenabschnitt (54) des Klemmringes (52) nimmt die radiale Tiefe der Ausnehmungen (55) zwischen den Ringrippen (56) vom Größtmaß am vorderen ende des geschlitzen Längenabschnittes (54) bis auf null am hinteren Ende des geschlitzten Längenabschnittes (54) ab.

17. Rohrklemmverbindung nach einem oder mehreren der Ansprüche 1 bis 16 mit einer Überwurfmutter,
**gekennzeichnet** durch die Merkmale:
- an der Überwurfmutter (74) wird die Anlagefläche (83) für den Klemmring (20) durch die Stirnfläche eines kragenförmigen Fortsatzes (82) gebildet, der an dem kreisringförmigen bund (81) der Überwurfmutter (74) in axialer Richtung anschließt und sich in Richtung des Innengewindes der Überwurfmutter (74) erstreckt,
- der kreisringförmige Fortsatz hat
- - eine lichte Weite, die nicht kleiner als die lichte Weite des hinteren Endes des Klemmringes (20) ist, und
- - einen Außendurchmesser, der nicht größer als der Außendurchmesser des hinteren Endes des Klemmringes (20) ist.

18. Rohrklemmverbindung nach einem oder mehreren der Ansprüche 1 bis 17,
**gekennzeichnet** durch die Merkmale:
- der Kupplungskörper (46) weist auf seiner Innenseite einen Bund (47) auf, dessen lichte Weite nicht kleiner als die lichte Weite des Rohres (12) ist,
- die dem Rohr (12) zugekehrte Stirnfläche des Bundes (47) ist zumindest annähernd eben ausgebildt und normal zur Längsachse des Kupplungskörpers (46) ausgerichtet,
- bevorzugt weist die Innenseite des Kupplungskörpers (46) im Anschluß an den Bund (47) eine Kreiszylinderfläche (49) auf, die eine gewisse axiale Erstreckung hat und deren lichte Weite zumindest annähernd gleich oder geringfügig größer als der Außendurchmesser des Rohres (12) ist,
- an die Kreiszylinderfläche (49) schließt eine Innenkonusfläche (50) an, deren Neigungswinkel gegenüber der Längsachse des Kupplungskörpers (46) vorzugsweise im Winkelbereich von 30° - 45° liegt,
- an die Innenkonusfläche (50) schließt die Innenkonusfläche (51) für den Klemmring (20) an.

19. Rohrklemmverbindung nach einem oder mehreren der Ansprüche 1 bis 17,
**gekennzeichnet** durch die Merkmale:
- das Kupplungsgehäuse (89) weist auf seiner Innenseite einen bund (94) auf, dessen lichte Weite nicht kleiner als die lichte Weite des Rohres (91; 92) ist,
- von der dem Rohr (91; 92) zugekehrten Stirnseite des Bundes (94) hat ein äußerer Ringbereich zumindest annähernd die Form einer ebenen Stirnfläche (95), die normal zur Längsachse des Kupplungsgehäuses (89) ausgerichtet ist,
- an dem daran nach innen anschließenden inneren Ringbereich des Bundes (94) ist ein axialer Fortsatz (96) angeordnet oder angeformt,
- - dessen innere Umfangsfläche (97) zumindest annähernd als Kreiszylinderfläche ausgebildet ist, deren lichte Weite nicht kleiner als die lichte Weite des Rohres (91; 92) ist, und
- - dessen äußere Umfangsfläche (98) entweder als Kreiszylinderfläche oder, bevorzugt, als Mantelfläche eines Kegelstumpfes ausgebildet ist, dessen Mantellinien gegenüber der Längsachse des Kupplungsgehäuses (89) einen Neigungswinkel zwischen 20° und 45° haben,
- das mit dem Kupplungsgehäuse (89) zusammenwirkende Ende des Rohres (91; 92) ist auf seiner Innenseite mit einer auf den axialen Fortsatz (96) am Kupplungsgehäuse (89) abgestimmten Ausnehmung (99) versehen.

## Claims

1. A pipe clamping connection with the features:
- a hollow coupling body has an inner conical surface for the arrangement of a clamping ring, the large diameter of which inner conical surface faces the free front face of the coupling body at the outlet of its cavity,
- the coupling body has adjoining its free front face an outer thread for a sleeve nut or an inner thread for a cap screw arranged centrally to the inner conical surface,
- the cap screw or sleeve nut has a contact surface at the front face for the clamping ring,
- the clamping ring has on its circular cylindrical inside a number of circulating annular ribs closed in themselves, each of which is arranged in a normal plane to its longitudinal axis,
- the annular ribs have a sharp edge on the inside rim,
- the clamping ring has on its outside an outer conical surface which is at least approximately co-ordinated to the inner conical surface of the coupling body,
characterised by the features:
- the inner conical surface (23) on the coupling body (16) and the outer conical surface (29) on the clamping ring (20) have a very small angle of inclination in relation to the longitudinal axis,
- the contact surface (31) - on the clamping ring (20) - for the cap screw (19) or sleeve nut, and the contact surface (27) - on the cap screw (19) or sleeve nut - for the clamping ring (20) is at least approximately flatly designed and orientated normally to the longitudinal axis of the clamping ring (20),
- the clamping ring (20) has a radially continuous helical slot (33) extending in a spiral manner which, in the axial direction at the front end of the clamping ring (20) with the smaller conical diameter, ends at a certain distance from the front face (32) of the clamping ring (20),
- the direction of turn of the helical slot (33) is opposed to the direction of turn of the thread between the coupling body (16) and the cap screw (19) or sleeve nut.

2. A pipe clamping connection according to claim 1, characterised by the features:
- the clamping ring (20) also has a longitudinal portion (35) of a certain length on its back end with the larger conical diameter, which portion is unslotted,
- this unslotted back longitudinal portion (35) of the clamping ring (20) preferably has a circular cylindrical outer surface (37).

3. A pipe clamping connection according to claim 1 and/or claim 2, characterised by the features:
- the inner conical surface (23) of the coupling body (16) has an angle of inclination in relation to its longitudinal axis of at least approximately 4.5°,
- the outer conical surface (29) of the clamping ring (20) has an angle of inclination in relation to its longitudinal axis of up to 1° smaller than the angle of inclination of the inner conical surface (23) of the coupling body (16).

4. A pipe clamping connection according to one or more of claims 1 to 3, characterised by the features:
- the unslotted longitudinal portion (36) on the front end of the clamping ring (20) has an axial extension which is at least equal to the axial distance of two adjacent annular ribs (41) on the inside of the clamping ring (20),
- the axial extension of the unslotted longitudinal portion (36) on the front end of the clamping ring (20) is preferably at least approximately 0.1 times the inside diameter (nominal diameter) of the clamping ring (20) (nominal diameter and at the same time outer diameter of the pipe (12)).

5. A pipe clamping connection according to one or more of claims 1 to 3, characterised by the features:
- the annular ribs (41) have a radial height of at least approximately 0.4mm,
- the annular ribs (41) preferably have an axial distance between 1.2mm and 1.4mm,
- the front flank (42) - facing the front end (32) - of the annular ribs (41) is preferably orientated normally to the longitudinal axis of the clamping ring (20), and the back flank (43) from the sharp edge of the annular rib (41) to the base of the front flank (42) of the subsequent annular rib (41) is rounded in longitudinal section so as to be at least approximately constantly concave.

6. A pipe clamping connection according to one or more of claims 1 to 4, characterised by the feature:
- the unslotted longitudinal portion (35) on the back end of the clamping ring (20) has an axial extension which is at least approximately 0.1 times the nominal diameter of the clamping ring (20).

7. A pipe clamping connection according to one or more of claims 1 to 5, characterised by the features:
- the helical slot (33) has 4 complete turns,
- the pitch of the helical slot (33) is preferably 0.1 times the nominal diameter.

8. A pipe clamping connection according to one or more of claims 1 to 6, characterised by the feature:
- the coupling body (16) and the clamping ring (20) are manufactured from a metal, the strength of which is greater than that of the material of the outside of the pipe (12) to be coupled or at least its outside.

9. A pipe clamping connection according to claim 7, characterised by the features:
- the clamping ring (20), in the region of the unslotted front longitudinal portion (36) in a portion (38) - adjoining the front face (32) - of its outer conical surface (29), is inwardly displaced to a certain extent parallel to the said outer conical surface,
- the undersize of this displaced portion (38) in relation to the remaining outer conical surface (29) is preferably 0.1mm in radius,
- the axial extension of the displaced portion (38) is preferably 2mm,
- a circulating groove (39) preferably adjoins the displaced portion (38), which groove is preferably 0.1mm deep in relation to the displaced portion (38) and which is preferably 0.5mm wide,
- the rear wall of the groove (39) adjoins the outer conical surface (29) of the clamping ring (20) in a sharp-edged manner,
- the front face (32) of the clamping ring (20) is complete and the displaced portion (38) is coated with an anti-corrosive agent approximately as far as the groove (39),
- the helical slot (33) ends at the front end of the clamping ring (20) at least approximately 0.5mm in front of the groove (39).

10. A pipe clamping connection according to claim 8, characterised by the features:
- the anti-corrosive agent comprises polyethylene, polytetrafluoroethylene, polyamide or another thermoplastic synthetic material,
- the anti-corrosive agent is preferably applied to the clamping ring (20) in powdered starting form in the whirl sintering process.

11. A pipe clamping connection according to one or more of claims 1 to 9, characterised by the feature:
- the clamping ring and preferably also the coupling body are manufactured from synthetic material, in particular glass fibre-reinforced synthetic material (GFK).

12. A pipe clamping connection according to claim 11 made from GFK, characterised by the features:
- on the clamping ring in the region of the annular ribs, the glass fibre reinforcement is orientated in the circumferential direction,
- the proportion of glass fibres in the material of the annular ribs is preferably greater than in the material of the remaining parts of the clamping ring.

13. A pipe clamping connection according to one or more of claims 1 to 12, characterised by the features:
- the clamping ring (20) is chamfered at its back end on the inside,
- the chamfer (44) preferably has an angle of inclination of 30° in relation to the longitudinal axis of the clamping ring (20) and preferably has an axial extension of 1mm.

14. A pipe clamping connection according to one or more of claims 1 to 13, characterised by the features:
- the clamping ring (20) is chamfered at its front end on the outside,
- the chamfer (45) preferably has an angle of inclination of 30° in relation to the longitudinal axis of the clamping ring (20) and preferably has an axial extension of 0.5mm.

15. A pipe clamping connection according to one or more of claims 1 to 14, characterised by the features:
- on the coupling body (62), a circular cylindrical surface (64) adjoins the inner conical surface (63) for the clamping ring (20), the inside diameter of which circular cylindrical surface is larger than the outer diameter of the back end of the clamping ring (20),
- the transition point (65) between the inner conical surface (63) and the circular cylindrical surface (64) is situated inside the longitudinal portion of the coupling body (62) which receives the clamping ring (20) after the tightening of the cap screw (19) or sleeve nut,
- a caulking ring (66) is inserted between the back surface (31) of the clamping ring (20) and the front contact surface (27) of the cap screw (19) or sleeve nut, the inside diameter of which caulking ring is not smaller than the nominal diameter of the clamping ring (20) and the outer diameter of which in the unstressed resting state is at least approximately equal to the inside diameter of the circular cylindrical surface (64) on the coupling body (62),
- the two end surfaces (67, 68) of the caulking ring (66) extend parallel to each other and have the form of the generated surface of a frustum,
- the inclination of the generating lines of the two frustum-shaped end surfaces (67, 68) of the caulking ring (66) in relation to the central axis of the caulking ring (66) is preferably in the region of 60°-75°,
- the circumferential surface (69) of the caulking ring (66) is designed as a circular cylindrical surface in the unstressed resting state and at least the circumferential edge (70) at the transition to the inner end surface (68) of the caulking ring (66) is designed in a sharp-edged manner.

16. A pipe clamping connection according to one or more of claims 1 to 15, characterised by the feature:
- in the slotted longitudinal portion (54) of the clamping ring (52), the radial depth of the recesses (55) between the annular ribs (56) decreases from the maximum size at the front end of the slotted longitudinal portion (54) to nothing at the back end of the slotted longitudinal portion (54).

17. A pipe clamping connection according to one or more of claims 1 to 16 with a sleeve nut, characterised by the features:
- on the sleeve nut (74), the contact surface (83) for the clamping ring (20) is formed by the end surface of a collar-shaped elongation (82) which adjoins the circular ring-shaped shoulder (81) of the sleeve nut (74) in the axial direction and extends in the direction of the inner thread of the sleeve nut (74),
- the circular ring-shaped elongation has
- - an inside diameter which is not smaller than the inside diameter of the back end of the clamping ring (20), and
- - an outer diameter which is not larger than the outer diameter of the back end of the clamping ring (20).

18. A pipe clamping connection according to one or more of claims 1 to 17, characterised by the features:
- the coupling body (46) has on its inside a shoulder (47), the inside diameter of which is not smaller than the inside diameter of the pipe (12),
- the end surface - facing the pipe (12) - of the shoulder (47) is at least approximately flatly designed and orientated normally to the longitudinal axis of the coupling body (46),
- the inside of the coupling body (46) preferably has a circular cylindrical surface (49) adjoining the shoulder (47), which circular cylindrical surface has a certain axial extension and the inside diameter of which is at least approximately equal to or slightly larger than the outer diameter of the pipe (12),
- an inner conical surface (50) adjoins the circular cylindrical surface (49), the angle of inclination of which inner conical surface in relation to the longitudinal axis of the coupling body (46) is preferably in the angular region of 30°-45°,
- the inner conical surface (51) for the clamping ring (51) adjoins the inner conical surface (50).

19. A pipe clamping connection according to one or more of claims 1 to 17, characterised by the features:
- the coupling housing (89) has a shoulder (94) on its inside, the inside diameter of which shoulder is not smaller than the inside diameter of the pipe (91, 92),
- an outer annular region of the front face - facing the pipe (91, 92) - of the shoulder (94) has at least approximately the form of a flat end surface (95) which is orientated normally to the longitudinal axis of the coupling housing (89),
- on the inner annular region - inwardly joining thereto - of the shoulder (94), an axial elongation (96) is arranged or formed,
- - the inner circumferential surface (97) of which elongation is at least approximately designed as a circular cylindrical surface, the inside diameter of which is not smaller than the inside diameter of the pipe (91, 92), and
- - the outer circumferential surface (98) of which elongation is designed either as a circular cylindrical surface or, preferably, as a generated surface of a frustum, the generating lines of which in relation to the longitudinal axis of the coupling housing (89) have an angle of inclination of between 20° and 45°,
- the end of the pipe (91, 92) co-operating with the coupling housing (89) is provided on its inside with a recess (99) co-ordinating with the axial elongation (96) on the coupling housing (89).

## Revendications

1. Raccord de tubes présentant les caractéristiques suivantes :
- un corps de raccord, creux, comporte une surface conique intérieure pour servir d'appui à une bague de pincement, surface dont le diamètre est supérieur à celui de la face frontale libre du corps de raccord à l'embouchure de sa cavité,
- le corps de raccord comporte au niveau de sa face frontale libre, un filetage intérieur prévu au milieu de la surface conique intérieure pour une vis- chapeau ou un filetage extérieur pour un écrou-chapeau,
- la vis-chapeau ou l'écrou-chapeau présente une surface d'appui frontale pour la bague de pincement,
- la bague de pincement comporte sur sa face intérieure cylindrique circulaire, un certain nombre de nervures annulaires fermées, périphériques, qui sont chaque fois prévues dans un plan perpendiculaire à son axe longitudinal,
- les nervures annulaires présentent au niveau de leur bord intérieur, une arête vive,
- la bague de pincement comporte sur sa face extérieure, une surface conique extérieure qui correspond au moins approximativement à la surface conique intérieure du corps de raccord,
raccord caractérisé par les caractéristiques suivantes :
- la surface conique intérieure (23) du corps de raccord (16) et la surface conique extérieure (29) de la bague de pincement (20) ont un angle très faible par rapport à l'axe longitudinal,
- une surface d'appui (31) pour la vis-chapeau (19) ou l'écrou-chapeau est prévue sur l'anneau de pincement (20) et sur la vis-chapeau (19) ou l'écrou-chapeau se trouve la surface d'appui (27) pour la bague de pincement (20) est au moins approximativement plane en étant perpendiculaire à l'axe longitudinal de la bague de pincement (20).
- la bague de pincement (20) présente une fente hélicoïdale (33), traversant radialement, continue, qui, dans la direction axiale, à l'extrémité avant de la bague de pincement (20) présente un diamètre de cône plus faible en se terminant à une certaine distance de la face frontale (32) de la bague de pincement (20),
- le sens de la fente hélicoïdale (33) est opposé au sens des spires du filetage entre le corps de raccord (16) et la vis-chapeau (19) ou l'écrou-chapeau.

2. Raccord de tubes selon la revendication 1, caractérisé par les caractéristiques suivantes :
- la bague de pincement (20) présente également au niveau de son extrémité arrière de plus grand diamètre de cône, un segment de longueur (35), d'une certaine longueur, non fendu,
- de préférence ce segment de longueur arrière (35), non fendu de la bague de pincement (20) présente une surface extérieure (37) cylindrique circulaire.

3. Raccord de tubes selon la revendication 1 et/ou la revendication 2, caractérisé en ce que :
- la surface conique intérieure (23) du corps de raccord (16) présente un angle d'inclinaison par rapport à son axe longitudinal qui est au moins approximativement égal à 4,5°,
- la surface conique extérieure (29) de la bague de pincement (20) présente un angle d'inclinaison par rapport à son axe longitudinal qui est inférieur jusqu'à 1° par rapport à l'angle d'inclinaison de la surface conique intérieure (23) du corps de raccord (16).

4. Raccord de tubes selon l'une ou plusieurs des revendications 1 à 3, caractérisé en ce que :
- le segment de longueur (36) non fendu à l'extrémité avant de la bague de pincement (20) présente une extension axiale au moins égale à la distance axiale de deux nervures annulaires (41) adjacentes sur la face intérieure de la bague de pincement (20),
- de préférence, l'extension axiale du segment de longueur (36) non fendu à l'extrémité avant de la bague de pincement (20) correspond au moins approximativement à 0,1 fois la largeur libre (largeur nominale) de la bague de pincement (20) (largeur nominale) et en même temps le diamètre extérieur du tube (12).

5. Raccord de tubes selon l'une ou plusieurs des revendications 1 à 3, caractérisé en ce que :
- les nervures annulaires (41) ont une hauteur radiale au moins approximativement égale à 0,4 mm,
- les nervures annulaires (41) ont de préférence une distance axiale comprise entre 1,2 et 1,4 mm,
- de préférence le flanc avant (42) des nervures annulaires (41) tourné vers la face frontale avant (32) est aligné perpendiculairement à l'axe longitudinal de la bague de pincement (20) et le flanc arrière (43) est au moins approximativement arrondi de manière concave à partir de l'arête vive de la nervure annulaire (41) jusqu'à la base du flanc avant (42) de la nervure annulaire (41) suivante, au niveau de la fente longitudinale.

6. Raccord de tubes selon l'une ou plusieurs des revendications 1 à 4, caractérisé en ce que :
- le segment de longueur (35) non fendu à l'extrémité arrière de la bague de pincement (20) a une extension axiale au moins approximativement égale à 0,1 fois la largeur nominale de la bague de pincement (20).

7. Raccord de tubes selon l'une ou plusieurs des revendications 1 à 5, caractérisé en ce que :
- la fente hélicoïdale (33) comprend quatre spires complètes,
- la pente de la fente hélicoïdale (33) correspond de préférence à 0,1 fois la largeur nominale.

8. Raccord de tubes selon l'une ou plusieurs des revendications 1 à 6, caractérisé en ce que le corps de raccord (16) et la bague de pincement (20) sont fabriqués en métal et la résistance du métal est supérieure à celle du matériau de la face extérieure du tube à raccorder (12) ou au moins de sa face extérieure.

9. Raccord de tubes selon la revendication 7, caractérisé en ce que :
- la bague de pincement (20), au niveau de son segment de longueur avant (36) non fendu, est décalée vers l'intérieur, à une certaine dimension, sur un segment (38) adjacent à sa face frontale (32), et cela parallèlement à sa surface extérieure conique (29),
- la dimension de ce décrochement (38) par rapport à la surface conique extérieure (29) par ailleurs correspond de préférence à 0,1 mm pour le rayon,
- l'extension axiale de ce segment décroché (38) est égale de préférence à 2,0 mm,
- de préférence, une nervure périphérique (39) fait suite à ce segment à décrochement (38), nervure qui a une profondeur de préférence égale à 0,1 mm par rapport au segment à décrochement (38) et une largeur de préférence égale à 0,5 mm,
- la paroi arrière de la nervure (39) rejoint par arête vive la surface conique extérieure (29) de la bague de pincement (20),
- la face avant (32) de la bague de pincement (20) est complète et le segment à décrochement (38) est revêtu d'un moyen de protection contre la corrosion, pratiquement jusqu'au niveau de la rainure (39),
- la fente hélicoïdale (33) se termine à l'extrémité avant de la bague de pincement (20), au moins approximativement 0,5 mm avant la rainure (39).

10. Raccord de tubes selon la revendication 8, caractérisé en ce que :
- le moyen de protection anti-corrosion est du polyéthylène, du polytétrafluoréthylène, du polyamide ou une autre matière synthétique thermoplastique,
- le moyen de protection anti-corrosion est de préférence sous une forme initiale pulvérulente appliquée par procédé à lit fluidisé sur la bague de pincement (20).

11. Raccord de tubes selon une ou plusieurs des revendications 1 à 9, caractérisé en ce que :
- la bague de pincement et de préférence également le corps du raccord sont en matière synthétique notamment en matière synthétique renforcée par des fibres de verre (GFK).

12. Raccord de tubes selon la revendication 11, en matière synthétique renforcée par des fibres de verre (GFK), caractérisé en ce que :
- sur la bague de pincement, au niveau des nervures annulaires, les fibres de verre constituant le moyen d'armature sont alignées dans la direction périphérique,
- de préférence dans le matériau constituant les nervures annulaires, la teneur en fibres est supérieure à celle dont le matériau correspond aux autres parties de la bague de pincement.

13. Raccord de tubes selon l'une ou plusieurs des revendications 1 à 12, caractérisé en ce que :
- la bague de pincement (20) présente un congé au niveau de l'extrémité arrière de sa surface intérieure,
- le congé (44) correspond de préférence à un angle de 30° par rapport à l'axe longitudinal de la bague de pincement (20) et une longueur axiale de préférence de 1,0 mm.

14. Raccord de tubes selon l'une ou plusieurs des revendications 1 à 13, caractérisé en ce que :
- la bague de pincement (20) présente un congé à son extrémité avant, sur sa face extérieure,
- le congé (45) correspond de préférence à un angle de 30° par rapport à l'axe longitudinal de la bague de pincement (20) et sa longueur axiale est de préférence égale à 0,5 mm.

15. Raccord de tubes selon l'une ou plusieurs des revendications 1 à 14, caractérisé en ce que :
- le corps de raccord (62) est relié à une surface conique intérieure (63) pour la bague de pincement (20) avec une surface cylindrique circulaire dont la dimension libre est supérieure au diamètre extérieur de l'extrémité arrière de la bague de pincement (20),
- la zone transitoire (65) entre la surface conique intérieure (63) et la surface cylindrique circulaire (64) est située à l'intérieur du segment de longueur du corps de raccord (62) occupé par la bague de pincement (20) après le serrage de la vis-chapeau ou de l'écrou-chapeau (19),
- entre la surface frontale arrière (31) de la bague de pincement (20) et la surface d'appui avant (27) de la vis-chapeau (19) ou de l'écrou-chapeau, il est prévu une bague de blocage (66) dont le diamètre libre n'est pas inférieur au diamètre intérieur de la bague de pincement (20), et en ce que son diamètre extérieur à l'état de repos, non tendu, est au moins approximativement égal au diamètre de la surface cylindrique circulaire (64) au niveau du corps de raccord (62),
- les deux surfaces frontales (67, 68) de la bague de blocage (66) sont parallèles et ont la forme d'une surface de tronc de cône,
- l'inclinaison des génératrices des deux surfaces frontales tronconiques (67, 68) de la bague de serrage (66) fait de préférence par rapport à l'axe médian de la bague de blocage (66) un angle compris entre 60° et 75°,
- la surface périphérique (69) de la bague de blocage (66), à l'état de repos, non tendue, présente une forme de cylindre circulaire et au moins l'arête périphérique (66) présente une arête vive à la transition vers la surface frontale intérieure (68) de la bague de blocage (66).

16. Raccord de tubes selon l'une ou plusieurs des revendications 1 à 15, caractérisé en ce que :
- la profondeur radiale des cavités (55) entre les nervures annulaires (56) dans le segment de longueur fendu (54) de la bague de pincement (52) diminue à partir de la plus grande dimension à l'extrémité avant du segment de longueur fendu (54) jusqu'à 0 à l'extrémité arrière du segment de longueur fendu (54).

17. Raccord de tubes selon l'une ou plusieurs des revendications 1 à 16 avec un écrou-chapeau, caractérisé en ce que :
- l'écrou-chapeau (74) forme la surface d'appui (83) pour la bague de serrage (20), cette surface étant formée par la surface frontale d'un prolongement (82) en forme de rebord qui est relié au collet circulaire (81) de l'écrou-chapeau (74), dans sa direction axiale et s'étend en direction du filetage intérieur de l'écrou-chapeau (74),
- le prolongement de forme circulaire présente un diamètre qui n'est pas inférieur au diamètre de l'extrémité arrière de la bague de pincement (20),
- un diamètre extérieur qui n'est pas supérieur au diamètre extérieur de l'extrémité arrière de la bague de pincement.

18. Raccord de tubes selon l'une ou plusieurs des revendications 1 à 17, caractérisé en ce que :
- le corps de raccord (46) comporte sur sa face intérieure un collet (47) dont le diamètre intérieur n'est pas inférieur au diamètre intérieur du tube (12),
- la surface frontale du collet (47) tournée vers le tube (12) est au moins approximativement plane et est alignée perpendiculairement à l'axe longitudinal du corps de raccord (46),
- de préférence, la face intérieure du corps de raccord (46) présente à la jonction du collet (47) une surface cylindrique circulaire (49) ayant une certaine longueur axiale et dont le diamètre intérieur est au moins approximativement égale ou légèrement supérieure au diamètre extérieur du tube (12),
- la surface cylindrique circulaire (49) se poursuit par une surface conique intérieure (50) dont l'angle par rapport à l'axe longitudinal du corps de raccord (46) est de préférence compris entre 30° et 45°,
- la surface conique intérieure (50) est reliée à la surface conique intérieure (51) de la bague de pincement (20).

19. Raccord de tubes selon l'une ou plusieurs des revendications 1 à 17, caractérisé en ce que :
- le boîtier de raccord (89) comporte un collet (94) sur sa face intérieure, collet dont le diamètre intérieur n'est pas inférieur à celui du tube (91, 92),
- partant de la face frontale du collet (94) tournée vers le tube (91, 92), une zone annulaire extérieure présente au moins approximativement la forme d'une surface frontale plane (95) qui est normale à l'axe longitudinal du boîtier d'accouplement (89),
- la zone annulaire intérieure du collet (94) qui fait directement suite vers l'intérieur comporte ou reçoit par moulage un prolongement axial (96),
- sa surface périphérique intérieure (97) est au moins en forme de surface cylindrique à section circulaire dont le diamètre intérieur n'est pas inférieur au diamètre intérieur du tube (91, 92) et,
- sa surface périphérique extérieure (98) présente de préférence une surface cylindrique circulaire ou notamment une surface-enveloppe d'un tronc de cône dont les génératrices présentent un angle compris entre 20° et 45° par rapport à l'axe longitudinal du boîtier d'accouplement (89).
- l'extrémité du tube (91, 92) qui coopère avec le boîtier d'accouplement (89) est munie sur sa face intérieure, d'une cavité (99) correspondant au prolongement axial (96) du boîtier d'accouplement (89).
